# EUROPEAN PATENT APPLICATION

(11) **EP 3 968 556 A1**
(43) Date of publication of application: **16.03.2022**
(21) Application number: 20813346.2
(22) Date of filing: 12.05.2020
(51) Int. Cl.: H04L 5/00

(54) **METHOD AND APPARATUS FOR DETERMINING CELL ACTIVATION DELAY**

(30) Priority: 31.05.2019 CN 201910473078
(71) Applicant: Huawei Technologies Co., Ltd., Longgang Shenzhen, Guangdong 518129 (CN)
(72) Inventor: WANG, Xiaona, Shenzhen, Guangdong 518129 (CN); GUAN, Peng, Shenzhen, Guangdong 518129 (CN); FAN, Bo, Shenzhen, Guangdong 518129 (CN)
(74) Representative: Maiwald Patent- und Rechtsanwaltsgesellschaft mbH
(86) International application number: PCT/CN2020/089815
(87) International publication number: WO 2020/238617

(57) **Abstract**

This application provides a method and an apparatus for determining a cell activation delay. The method includes: A terminal device or a network device may determine an activation delay corresponding to a to-be-activated cell based on that a downlink spatial filter of a downlink signal of the to-be-activated cell and a downlink spatial filter of a downlink signal of an activated cell are the same or different. In this way, the terminal device sends CSI within the activation delay. The network device is to receive the CSI within the activation delay, and determines, depending on whether the CSI is received, whether the to-be-activated cell is successfully activated. In other words, in an embodiment of this application, the terminal device and the network device can determine a proper activation delay, to avoid a case in which the terminal device and the network device mistakenly determine, due to an excessively long or excessively short activation delay, whether a secondary cell is successfully activated. In this way, an activation success rate of the cell is improved when power consumption overheads of the device are ensured.

## Description

This application claims priority to Chinese Patent Application No. 201910473078.8, filed with the Chinese Patent Office on May 31, 2019 and entitled "METHOD AND APPARATUS FOR DETERMINING CELL ACTIVATION DELAY", which is incorporated herein by reference in its entirety.

### TECHNICAL FIELD

This application relates to the field of communication technologies, and more specifically, to a method and an apparatus for determining a cell activation delay.

### BACKGROUND

In new radio (new radio, NR), a terminal device performs initial access in a primary cell (primary cell, PCell) after being powered on. Then, a network device may carry a configuration parameter of a secondary cell (secondary cell, SCell) by using configuration signaling or a radio resource control (radio resource control, RRC) configuration, to add the SCell to the terminal device.

Specifically, the network device may dynamically decide to configure the SCell for a user based on an internal algorithm, and deliver SCell activation signaling to the terminal device by using media access control (media access control, MAC)-control element (control element, CE) signaling. The terminal device activates a corresponding SCell based on the activation signaling, and then detects a synchronization signal block (synchronization signal block, SSB) signal in a corresponding time window, to implement downlink time-frequency domain synchronization between the SCell and the terminal device. The terminal device determines channel state information (channel state information, CSI) based on the SSB signal, and determines whether to report the CSI to the network device. If the network device receives the CSI within the time window, it is considered that the terminal device successfully completes activation of the SCell. If the network device does not receive the CSI within the time window, it is considered that the SCell fails to be activated.

In a conventional solution, a time length (which may be alternatively referred to as an activation delay) of the time window between the terminal device and the network device may be fixed. However, as the terminal device and the network device have increasingly high requirements on an activation success rate of a cell and power consumption overheads, how to set a value of an activation delay urgently needs to be resolved.

### SUMMARY

This application provides a method and an apparatus for determining a cell activation delay, to improve accuracy of the determined activation delay. In this way, an activation success rate of a cell is improved when power consumption overheads of a device are ensured.

According to a first aspect, a method for determining a cell activation delay is provided. The method includes: determining a spatial filter of a downlink signal of a to-be-activated cell of a terminal device and a spatial filter of a downlink signal of an activated cell of the terminal device; and determining an activation delay of the to-be-activated cell depending on whether the downlink spatial filter of the downlink signal of the to-be-activated cell is the same as the downlink spatial filter of the downlink signal of the activated cell, where the activation delay is used to transmit channel state information.

The terminal device or a network device may determine the activation delay corresponding to the to-be-activated cell based on that the downlink spatial filter of the downlink signal of the to-be-activated cell and the downlink spatial filter of the downlink signal of the activated cell are the same or different. In this way, the terminal device sends the CSI within the activation delay. The network device is to receive the CSI within the activation delay, and determines, depending on whether the CSI is received, whether the to-be-activated cell is successfully activated. In other words, in this embodiment of this application, the terminal device and the network device can determine a proper activation delay, to avoid a case in which the terminal device and the network device mistakenly determine, due to an excessively long or excessively short activation delay, whether a secondary cell is successfully activated. In this way, an activation success rate of the cell is improved when the power consumption overheads of the device are ensured.

In a possible implementation, the spatial filter is a spatial sending filter and/or a spatial receiving filter.

The spatial filter may be the spatial sending filter and the spatial receiving filter, the spatial filter may be the spatial sending filter, or the spatial filter may be the spatial receiving filter. In this embodiment of this application, the terminal device and the network device can further determine the proper activation delay. In this way, the activation success rate of the cell is further improved when the power consumption overheads of the device are ensured.

In a possible implementation, when the spatial filter is the spatial sending filter or the spatial receiving filter, the determining an activation delay of the to-be-activated cell depending on whether the downlink spatial filter of a downlink signal of the to-be-activated cell is the same as the downlink spatial filter of a downlink signal of the activated cell includes at least one of the following: when the spatial filter of the downlink signal of the to-be-activated cell is the same as the spatial filter of the downlink signal of the activated cell, determining that the activation delay of the to-be-activated cell is a first delay; or when the spatial filter of the downlink signal of the to-be-activated cell is different from the spatial filter of the downlink signal of the activated cell, determining that the activation delay of the to-be-activated cell is a second delay.

The activation delays determined depending on whether the downlink spatial sending filter of the downlink signal of the to-be-activated cell and the downlink spatial sending filter of the downlink signal of the activated cell are the same or different are different, or the activation delays determined depending on whether the downlink spatial receiving filter of the downlink signal of the to-be-activated cell and the downlink spatial receiving filter of the downlink signal of the activated cell are the same or different are different. In this way, the terminal device and the network device can further determine the proper activation delay. In this way, the activation success rate of the cell is further improved when the power consumption overheads of the device are ensured.

In a possible implementation, when the spatial filter is the spatial sending filter and the spatial receiving filter, the determining an activation delay of the to-be-activated cell depending on whether the spatial filter of the downlink signal of the to-be-activated cell is the same as the spatial filter of the downlink signal of the activated cell includes at least one of the following: when a spatial sending filter of the downlink signal of the to-be-activated cell is the same as a spatial sending filter of the downlink signal of the activated cell, and a spatial receiving filter of the downlink signal of the to-be-activated cell is the same as a spatial receiving filter of the downlink signal of the activated cell, determining that the activation delay of the to-be-activated cell is a first delay; when a spatial sending filter of the downlink signal of the to-be-activated cell is the same as a spatial sending filter of the downlink signal of the activated cell, and a spatial receiving filter of the downlink signal of the to-be-activated cell is different from a spatial receiving filter of the downlink signal of the activated cell, determining that the activation delay of the to-be-activated cell is a second delay; when a spatial sending filter of the downlink signal of the to-be-activated cell is different from a spatial sending filter of the downlink signal of the activated cell, and a spatial receiving filter of the downlink signal of the to-be-activated cell is the same as a spatial receiving filter of the downlink signal of the activated cell, determining that the activation delay of the to-be-activated cell is a third delay; or when a spatial sending filter of the downlink signal of the to-be-activated cell is different from a spatial sending filter of the downlink signal of the activated cell, and a spatial receiving filter of the downlink signal of the to-be-activated cell is different from a spatial receiving filter of the downlink signal of the activated cell, determining that the activation delay of the to-be-activated cell is a fourth delay.

The terminal device or the network device may determine the activation delay of the to-be-activated cell depending on whether the spatial sending filter of the downlink signal of the to-be-activated cell is the same as the spatial sending filter of the downlink signal of the to-be-activated cell, and whether the spatial receiving filter of the downlink signal of the to-be-activated cell is the same as the spatial receiving filter of the downlink signal of the to-be-activated cell. In this way, the terminal device and the network device can further determine the proper activation delay. In this way, the activation success rate of the cell is further improved when the power consumption overheads of the device are ensured.

In a possible implementation, before the determining an activation delay of the to-be-activated cell, the method further includes: determining whether the spatial sending filter of the downlink signal of the to-be-activated cell is the same as the spatial sending filter of the downlink signal of the activated cell, based on at least one of the following information: whether the to-be-activated cell and the activated cell belong to a same frequency range, whether the to-be-activated cell and the activated cell share a radio frequency channel, and whether a frequency spacing between an operating frequency of the to-be-activated cell and an operating frequency of the activated cell is greater than or equal to a preset threshold.

The terminal device or the network device may further determine the activation delay corresponding to the to-be-activated cell, in other words, the terminal device or the network device can transmit the channel state information within a proper activation delay. In this way, the activation success rate of the cell is improved when the power consumption overheads of the device are ensured.

In a possible implementation, the operating frequency of the to-be-activated cell belongs to a frequency range 1 or a frequency range 2.

The operating frequency of the to-be-activated cell may belong to a high frequency range or may belong to a low frequency range. In other words, this embodiment of this application can be applied to more scenarios.

In a possible implementation, the operating frequency of the activated cell belongs to the frequency range 1 or the frequency range 2.

The operating frequency of the activated cell may belong to the high frequency range or may belong to the low frequency range. In other words, this embodiment of this application can be applied to more scenarios.

In a possible implementation, the terminal device and the network device may further determine the activation delay of the to-be-activated cell with reference to whether there is an activated cell of the terminal device in a frequency range to which the operating frequency of the to-be-activated cell belongs, and whether the spatial filter of the downlink signal of the to-be-activated cell is the same as the spatial filter of the downlink signal of the activated cell.

The terminal device and the network device may further determine the activation delay of the to-be-activated cell by considering two factors: whether the spatial sending filters are the same, and whether there is an activated cell in a frequency range to which the operating frequency of the to-be-activated cell belongs; or the terminal device and the network device may further determine the activation delay of the to-be-activated cell by considering two factors: whether the spatial receiving filters are the same, and whether there is an activated cell in a frequency range to which the operating frequency of the to-be-activated cell belongs. In this way, the activation success rate of the cell is further improved when the power consumption overheads of the device are ensured.

In a possible implementation, the terminal device and the network device may further determine the activation delay of the to-be-activated cell depending on whether the downlink spatial sending filter of the downlink signal of the to-be-activated cell is the same as the downlink spatial sending filter of the downlink signal of the activated cell, and whether the downlink spatial receiving filter of the downlink signal of the to-be-activated cell is the same as the downlink spatial receiving filter of the downlink signal of the activated cell, and with reference to whether there is an activated cell of the terminal device in a frequency range to which the to-be-activated cell belongs.

The terminal device and the network device may further determine the activation delay of the to-be-activated cell by considering three factors: whether the spatial sending filters are the same, whether the spatial receiving filters are the same, and whether there is an activated cell in a frequency range to which the operating frequency of the to-be-activated cell belongs. In this way, the activation success rate of the cell is further improved when the power consumption overheads of the device are ensured.

According to a second aspect, a method for determining a cell activation delay is provided. The method includes: determining a cell state of a to-be-activated cell of a terminal device; and determining an activation delay of the to-be-activated cell based on the cell state of the to-be-activated cell, where the activation delay is used to transmit channel state information.

The terminal device or a network device may determine a corresponding activation delay based on the cell state of the to-be-activated cell. In other words, different cell states may correspond to different activation delays. In this way, the terminal device sends the CSI within the activation delay determined based on the cell state. The network device is to receive the CSI within the activation delay, and determines, depending on whether the CSI is received, whether the to-be-activated cell is successfully activated. In this embodiment of this application, the terminal device and the network device can determine a proper activation delay, to avoid a case in which the terminal device and the network device mistakenly determine, due to an excessively long or excessively short activation delay, whether a secondary cell is successfully activated. In this way, an activation success rate of the cell is improved when the power consumption overheads of the device are ensured.

In a possible implementation, the cell state includes at least one of whether the cell is known, synchronization information, whether a serving beam is known, a beam reception capability of the terminal device, and whether the channel state information is known.

Whether the serving beam is known means whether a beam used to serve the terminal device for communication is known. The cell is unknown may mean that the terminal device needs to perform cell detection. The cell is known may mean that the terminal device does not need to perform cell detection. The cell detection means that the terminal device needs to perform blind cell detection on a time-frequency resource.

In a possible implementation, the synchronization information includes at least one of whether an operating frequency is known, whether a downlink timing is known, and whether an uplink timing is known.

The synchronization information may include whether a specific location of the operating frequency of the to-be-activated cell is known.

In a possible implementation, the beam reception capability of the terminal device includes at least one of whether multi-beam sweeping reception is supported, whether wide beam reception is supported, and whether synchronization signal block SSB symbol-level beam reception is supported.

In a possible implementation, the determining an activation delay of the to-be-activated cell based on the cell state of the to-be-activated cell includes at least one of the following: when the to-be-activated cell is in a state in which the cell is unknown, and the serving beam is unknown, determining that the activation delay of the to-be-activated cell is a first delay; when the to-be-activated cell is in a state in which the cell is unknown, the serving beam is unknown, and the terminal device supports multi-beam sweeping reception, determining that the activation delay of the to-be-activated cell is a second delay; when the to-be-activated cell is in a state in which the cell is unknown, the serving beam is unknown, and the terminal device supports wide beam reception, determining that the activation delay of the to-be-activated cell is a third delay; when the to-be-activated cell is in a state in which the cell is known, and the serving beam is unknown, determining that the activation delay of the to-be-activated cell is a fourth delay; when the to-be-activated cell is in a state in which the cell is known, and the serving beam is known, determining that the activation delay of the to-be-activated cell is a fifth delay; or when the to-be-activated cell is in a state in which the cell is known, the serving beam is known, and the channel state information is unknown, determining that the activation delay of the to-be-activated cell is a sixth delay.

Different cell states may correspond to different activation delays. In this way, the terminal device or the network device can determine a value of the activation delay more accurately. In this way, the activation success rate of the cell is further improved when the power consumption overheads of the device are ensured.

In a possible implementation, before the determining an activation delay of the to-be-activated cell, the method further includes: when the to-be-activated cell and at least one activated cell belong to a same frequency range, determining that the to-be-activated cell is in a state in which the cell is known and/or the serving beam is known; when a spatial filter of a downlink signal of the to-be-activated cell is the same as a spatial filter of a downlink signal of at least one activated cell, determining that the to-be-activated cell is in a state in which the cell is known and/or the serving beam is known; when a valid measurement result of the to-be-activated cell is received within a preset time period that is before activation signaling is transmitted, determining that the to-be-activated cell is in a state in which the cell is known and/or the serving beam is known; or when the to-be-activated cell and all activated cells belong to different frequency ranges, determining that the to-be-activated cell is in a state in which the cell is unknown and/or the serving beam is unknown.

According to the foregoing manner, the specific cell state of the to-be-activated cell can be determined, so that the terminal device or the network device can determine the activation delay of the to-be-activated cell more accurately. In this way, the activation success rate of the cell is further improved when the power consumption overheads of the device are ensured.

According to a third aspect, an apparatus for determining a cell activation delay is provided. The apparatus may be a network device, or may be a chip in the network device. The apparatus may alternatively be a terminal device or a chip in the terminal device. The apparatus has a function of implementing the first aspect and various possible implementations thereof. The function may be implemented by hardware, or may be implemented by hardware by executing corresponding software. The hardware or the software includes one or more modules corresponding to the foregoing function.

In a possible design, the apparatus includes a transceiver module and a processing module. The transceiver module may be, for example, at least one of a transceiver, a receiver, or a transmitter. The transceiver module may include a radio frequency circuit or an antenna. The processing module may be a processor. Optionally, the apparatus further includes a storage module, and the storage module may be, for example, a memory. When the apparatus includes the storage module, the storage module is configured to store instructions. The processing module is connected to the storage module, and the processing module may execute the instructions stored in the storage module or instructions from another module, so that the apparatus performs the communication method according to the first aspect and various possible implementations thereof. In this design, the apparatus may be a network device.

In another possible design, when the apparatus is a chip, the chip includes a transceiver module and a processing module. The transceiver module may be, for example, an input/output interface, a pin, or a circuit on the chip. The processing module may be, for example, a processor. The processing module may execute instructions, so that the chip in the terminal device performs the communication method according to any one of the first aspect and the possible implementations thereof. Optionally, the processing module may execute instructions in a storage module, and the storage module may be a storage module in the chip, for example, a register or a buffer. The storage module may alternatively be located inside a communication device but outside the chip, for example, a read-only memory (read-only memory, ROM) or another type of static storage device that can store static information and instructions, or a random access memory (random access memory, RAM).

The processor mentioned above may be a general-purpose central processing unit (CPU), a microprocessor, an application-specific integrated circuit (application-specific integrated circuit, ASIC), or one or more integrated circuits configured to control program execution of the communication method according to the foregoing aspects.

According to a fourth aspect, an apparatus for determining a cell activation delay is provided. The apparatus may be a terminal device, or may be a chip in the terminal device. Alternatively, the apparatus is a network device or a chip in the network device. The apparatus has a function of implementing the second aspect and various possible implementations thereof. The function may be implemented by hardware, or may be implemented by hardware by executing corresponding software. The hardware or the software includes one or more modules corresponding to the foregoing function.

In a possible design, the apparatus includes a transceiver module and a processing module. The transceiver module may be, for example, at least one of a transceiver, a receiver, or a transmitter. The transceiver module may include a radio frequency circuit or an antenna. The processing module may be a processor.

Optionally, the apparatus further includes a storage module, and the storage module may be, for example, a memory. When the apparatus includes the storage module, the storage module is configured to store instructions. The processing module is connected to the storage module, and the processing module may execute the instructions stored in the storage module or instructions from another module, so that the apparatus performs the method according to any one of the second aspect or the possible implementations thereof.

In another possible design, when the apparatus is a chip, the chip includes a transceiver module and a processing module. The transceiver module may be, for example, an input/output interface, a pin, or a circuit on the chip. The processing module may be, for example, a processor. The processing module may execute instructions, so that the chip in the terminal device performs the communication method according to any one of the second aspect and the possible implementations thereof.

Optionally, the processing module may execute instructions in a storage module, and the storage module may be a storage module in the chip, for example, a register or a buffer. The storage module may alternatively be located inside a communication device but outside the chip, for example, a ROM or another type of static storage device that can store static information and instructions, or a RAM

The processor mentioned above may be a CPU, a microprocessor, an application-specific integrated circuit ASIC, or one or more integrated circuits configured to control program execution of the method according to the foregoing aspects.

According to a fifth aspect, a computer storage medium is provided. The computer storage medium stores program code, and the program code is used to indicate instructions for performing the method according to any one of the first aspect and the possible implementations thereof.

According to a sixth aspect, a computer storage medium is provided. The computer storage medium stores program code, and the program code is used to indicate instructions for performing the method according to any one of the second aspect and the possible implementations thereof.

According to a seventh aspect, a computer program product including instructions is provided. When the computer program product runs on a computer, the computer is enabled to perform the method according to any one of the first aspect or the possible implementations thereof.

According to an eighth aspect, a computer program product including instructions is provided. When the computer program product runs on a computer, the computer is enabled to perform the method according to any one of the second aspect or the possible implementations thereof.

According to a ninth aspect, a communication system is provided. The communication system includes the terminal device according to the third aspect and the network device according to the third aspect.

According to a tenth aspect, a communication system is provided. The communication system includes the terminal device according to the fourth aspect and the network device according to the fourth aspect.

Based on the foregoing technical solutions, the terminal device or the network device can determine the activation delay corresponding to the to-be-activated cell based on that the downlink spatial filter of the downlink signal of the to-be-activated cell and the downlink spatial filter of the downlink signal of the activated cell are the same or different. In this way, the terminal device sends the CSI within the activation delay. The network device is to receive the CSI within the activation delay, and determines, depending on whether the CSI is received, whether the to-be-activated cell is successfully activated. In other words, in this embodiment of this application, the terminal device and the network device can determine a proper activation delay, to avoid a case in which the terminal device and the network device mistakenly determine, due to an excessively long or excessively short activation delay, whether a secondary cell is successfully activated. In this way, an activation success rate of the cell is improved when the power consumption overheads of the device are ensured.

### BRIEF DESCRIPTION OF DRAWINGS

FIG. 1 is a schematic diagram of a communication system according to this application;
FIG. 2 is a schematic diagram of a method for determining a cell activation delay according to an embodiment of this application;
FIG. 3 is a schematic diagram of a method for determining a cell activation delay according to another embodiment of this application;
FIG. 4 is a schematic block diagram of an apparatus for determining a cell activation delay according to an embodiment of this application;
FIG. 5 is a schematic diagram of a structure of an apparatus for determining a cell activation delay according to an embodiment of this application;
FIG. 6 is a schematic block diagram of an apparatus for determining a cell activation delay according to another embodiment of this application;
FIG. 7 is a schematic diagram of a structure of an apparatus for determining a cell activation delay according to another embodiment of this application;
FIG. 8 is a schematic block diagram of an apparatus for determining a cell activation delay according to a specific embodiment of this application;
FIG. 9 is a schematic diagram of an apparatus for determining a cell activation delay according to another specific embodiment of this application;
FIG. 10 is a schematic diagram of an apparatus for determining a cell activation delay according to another specific embodiment of this application; and
FIG. 11 is a schematic diagram of an apparatus for determining a cell activation delay according to another specific embodiment of this application.

### DESCRIPTION OF EMBODIMENTS

The following describes technical solutions in this application with reference to the accompanying drawings.

The following describes terms in this application in detail.

### 1. Beam (beam):

The beam is a communication resource, and different beams may be considered as different communication resources. The different beams may be used to send same information, or may be used to send different information. The beam may correspond to at least one of a time domain resource, a space resource, and a frequency domain resource.

Optionally, a plurality of beams having same or similar types of communication features may be considered as one beam, and one beam may include one or more antenna ports, configured to transmit a data channel, a control channel, a sounding signal, and the like. For example, a transmit beam may refer to signal strength distribution formed in different directions in space after a signal is transmitted through an antenna, and a receive beam may refer to signal strength distribution in different directions in space of a radio signal received from an antenna.

Specifically, the beam may be a wide beam, may be a narrow beam, or may be a beam of another type. A beam forming technology may be a beamforming technology or another technical means. This is not limited in this application. Through the beamforming (beamforming) technology, a higher antenna array gain may be implemented by sending or receiving a signal in a specific direction in space. In addition, beams may be classified into a transmit beam and a receive beam of the network device, and a transmit beam and a receive beam of the terminal device. The transmit beam of the network device is used to describe beamforming information on a receive side of the network device, and the receive beam of the network device is used to describe beamforming information on a receive side of the network device. The transmit beam of the terminal device is used to describe beamforming information on a transmit side of the terminal device, and the receive beam of the terminal device is used to describe beamforming information on a receive side.

More specifically, the beamforming technology includes a digital beamforming technology, an analog beamforming technology, and a hybrid digital analog beamforming technology. The analog beamforming technology may be implemented by using a radio frequency. For example, a phase of a radio frequency chain (RF chain) is adjusted by using a phase shifter, to control a change of an analog beam direction. Therefore, one RF chain can only generate one analog beam at a same moment. In addition, for communication based on the analog beam, a beam at a transmit end and a beam at a receive end need to be aligned. Otherwise, a signal cannot be normally transmitted.

It should be understood that one or more antenna ports forming one beam may also be considered as one antenna port set.

It should be further understood that the beam may be further represented by using a spatial filter (spatial filter) or a spatial transmission filter (spatial domain transmission filter). In other words, the beam may also be referred to as the "spatial filter". A transmit beam is referred to as a "spatial transmit filter", and a receive beam is referred to as a "spatial receive filter" or a "downlink spatial filter". The receive beam of the network device or the transmit beam of the terminal device may also be referred to as an "uplink spatial filter", and the transmit beam of the network device or the receive beam of the terminal device may also be referred to as a "downlink spatial filter". Selection of N optimal beam pair links (beam pair links, BPLs) (one BPL includes one transmit beam of the network device and one receive beam of the terminal device, or one BPL includes one transmit beam of the terminal device and one receive beam of the network device) is used by the terminal device to select the transmit beam of the network device and/or the receive beam of the terminal device based on beam sweeping performed by the network device, and used by the network device to select the transmit beam of the terminal device and/or the receive beam of the network device based on beam sweeping performed by the terminal device.

Specifically, the transmit beam may be a base station transmit beam, or may be a terminal device transmit beam. When the transmit beam is the base station transmit beam, a base station sends reference signals to user equipment (user equipment, UE) through different transmit beams, and the UE receives, through a same receive beam, the reference signals sent by the base station through the different transmit beams, determines an optimal base station transmit beam based on the received signals, and then feeds back the optimal base station transmit beam to the base station, so that the base station updates the transmit beam. When the transmit beam is the terminal device transmit beam, the UE sends reference signals to the base station through different transmit beams, and the base station receives, through a same receive beam, the reference signals sent by the UE through the different transmit beams, determines an optimal UE transmit beam based on the received signals, and then feeds back the optimal UE transmit beam to the UE, so that the UE updates the transmit beam. The process of sending the reference signals through the different transmit beams may be referred to as beam sweeping, and the process of determining the optimal transmit beam based on the received signals may be referred to as beam matching.

The receive beam may be a base station receive beam, or may be a terminal device receive beam. When the receive beam is the base station receive beam, the UE sends reference signals to the base station through a same transmit beam, and the base station receives, through different receive beams, the reference signals sent by the UE, and then determines an optimal base station receive beam based on the received signals, to update the base station receive beam. When the receive beam is the UE receive beam, the base station sends reference signals to the UE through a same transmit beam, and the UE receives, through different receive beams, the reference signals sent by the base station, and then determines an optimal UE receive beam based on the received signals, to update the UE receive beam.

It should be noted that for downlink beam training, the network device configures a type of a reference signal resource set for beam training. When a repetition parameter configured for the reference signal resource set is "on", the terminal device assumes that reference signals in the reference signal resource set are transmitted by using a same downlink spatial filter, that is, are transmitted by using a same transmit beam. In this case, usually, the terminal device receives the reference signals in the reference signal resource set by using different receive beams, and obtains a best receive beam of the terminal device through training. Optionally, the terminal device may report best channel quality that is of N reference signals and that is measured by the UE. When the repetition parameter configured for the reference signal resource set is "off", the terminal device does not assume that the reference signals in the reference signal resource set are transmitted by using the same downlink spatial filter, that is, does not assume that the network device transmits the reference signals by using the same transmit beam. In this case, the terminal device selects N best beams from the resource set by measuring channel quality of the reference signals in the set, and feeds back the N best beams to the network device. Usually, in this case, the terminal device uses a same receive beam in this process.

### 2. Beamforming technology (beamforming):

By using the beamforming technology, a higher antenna array gain may be implemented by sending or receiving a signal in a specific direction in space. Analog beamforming: may be implemented by using a radio frequency. For example, a radio frequency chain (RF chain) adjusts a phase by using a phase shifter, to control a change in a direction of an analog beam. Therefore, one RF chain can only generate one analog beam at a same moment.

### 3. Beam management resource:

The beam management resource refers to a resource used for beam management, or may be represented as a resource used for calculating and measuring beam quality. The beam quality includes layer 1 reference signal received power (layer 1 reference signal received power, L1-RSRP), layer 1 reference signal received quality (layer 1 reference signal received quality, L1-RSRQ), and the like. Specifically, the beam management resource may include a synchronization signal, a broadcast channel, a downlink channel measurement reference signal, a tracking signal, a downlink control channel demodulation reference signal, a downlink shared channel demodulation reference signal, an uplink sounding reference signal, an uplink random access signal, and the like.

### 4: Beam indication information:

The beam indication information is used to indicate a beam used for transmission, including a transmit beam and/or a receive beam. The beam indication information includes at least one of a beam number, a beam management resource number, an uplink signal resource number, a downlink signal resource number, an absolute index of a beam, a relative index of a beam, a logical index of a beam, an index of an antenna port corresponding to a beam, an index of an antenna port group corresponding to a beam, an index of a downlink signal corresponding to a beam, a time index of a downlink synchronization signal block corresponding to a beam, beam pair link (beam pair link, BPL) information, a transmit parameter (Tx parameter) corresponding to a beam, a receive parameter (Rx parameter) corresponding to a beam, a transmit weight corresponding to a beam, a weight matrix corresponding to a beam, a weight vector corresponding to a beam, a receive weight corresponding to a beam, an index of a transmit weight corresponding to a beam, an index of a weight matrix corresponding to a beam, an index of a weight vector corresponding to a beam, an index of a receive weight corresponding to a beam, a reception codebook corresponding to a beam, a transmit codebook corresponding to a beam, an index of a reception codebook corresponding to a beam, and an index of a transmit codebook corresponding to a beam, where the downlink signal includes any one of a synchronization signal, a broadcast channel, a broadcast signal demodulation signal, a channel state information downlink signal (channel state information reference signal, CSI-RS), a cell-specific reference signal (cell-specific reference signal, CS-RS), a terminal device-specific reference signal (user equipment-specific reference signal, US-RS), a downlink control channel demodulation reference signal, a downlink data channel demodulation reference signal, and a downlink phase noise tracking signal. An uplink signal includes any one of an uplink random access sequence, an uplink sounding reference signal, an uplink control channel demodulation reference signal, an uplink data channel demodulation reference signal, or an uplink phase noise tracking signal. Optionally, the network device may further allocate a QCL identifier to beams having a quasi co-location (quasi co-location, QCL) relationship in beams associated with a frequency resource group. The beam may also be referred to as a spatial transmission filter, the transmit beam may also be referred to as a spatial transmit filter, and the receive beam may also be referred to as a spatial receive filter. The beam indication information may be further represented as a transmission configuration index (transmission configuration index, TCI). The TCI may include a plurality of parameters such as a cell number, a bandwidth part number, a reference signal identifier, a synchronization signal block identifier, and a QCL type. A co-location relationship, namely, quasi co-location (quasi co-location, QCL), is used to indicate that a plurality of resources have one or more same or similar communication features. A same or similar communication configuration may be used for the plurality of resources having the co-location relationship. For example, if two antenna ports have the co-location relationship, a large-scale channel property in which one port transmits a symbol may be inferred from a large-scale channel property in which the other port transmits a symbol. The large-scale property may include delay spread, an average delay, Doppler spread, a Doppler frequency shift, an average gain, a receive parameter, a receive beam number of a terminal device, transmit/receive channel correlation, a receive angle of arrival, spatial correlation of a receiver antenna, a dominant angle of arrival (angle of arrival, AoA), an average angle of arrival, AoA spread, and the like. Spatial quasi co-location (spatial QCL) may be considered as a type of QCL. The term "spatial" may be understood from a perspective of a transmit end or a receive end. From the perspective of the transmit end, if two antenna ports are spatially quasi co-located, it indicates that beam directions corresponding to the two antenna ports are the same in space, that is, spatial filters are the same. From the perspective of the receive end, if two antenna ports are spatially quasi co-located, it indicates that the receive end can receive, in a same beam direction, signals sent through the two antenna ports, that is, the two antenna ports are QCLed about the receive parameter.

### 5. QCL:

The co-location relationship is used to indicate that a plurality of resources have one or more same or similar communication features. A same or similar communication configuration may be used for the plurality of resources having the co-location relationship. For example, if two antenna ports have the co-location relationship, a large-scale channel property in which one port transmits a symbol may be inferred from a large-scale channel property in which the other port transmits a symbol. The large-scale property may include delay spread, an average delay, Doppler spread, a Doppler frequency shift, an average gain, a receive parameter, a receive beam number of a terminal device, transmit/receive channel correlation, a receive angle of arrival, spatial correlation of a receiver antenna, a dominant angle of arrival (Angle of Arrival, AoA), an average angle of arrival, AoA spread, and the like.

### 6. Spatial quasi co-location (spatial QCL):

The spatial QCL may be considered as a type of QCL. The term "spatial" may be understood from a perspective of a transmit end or a receive end. From the perspective of the transmit end, if two antenna ports are spatially quasi co-located, it indicates that beam directions corresponding to the two antenna ports are the same in space. From the perspective of the receive end, if two antenna ports are spatially quasi co-located, it indicates that the receive end can receive, in a same beam direction, signals sent through the two antenna ports.

### 7. Quasi co-location assumption (QCL assumption):

The QCL assumption refers to an assumption of whether there is a QCL relationship between two ports. A configuration and an indication of the quasi co-location assumption may be used to help the receive end receive and demodulate a signal. For example, the receive end can determine that a port A and a port B have the QCL relationship. In other words, a large-scale parameter of a signal measured on the port A may be used for signal measurement and demodulation on the port B.

### 8. Antenna panel (panel):

Signals in wireless communication need to be received and sent through antennas, and a plurality of antenna elements (antenna elements) may be integrated on one panel (panel). One radio frequency chain may drive one or more antenna elements. In the embodiments of this application, a terminal device may include a plurality of antenna panels, and each antenna panel includes one or more beams. A network device may also include a plurality of antenna panels, and each antenna panel includes one or more beams. The antenna panel may also be represented as an antenna array (antenna array) or an antenna subarray (antenna subarray). One antenna panel may include one or more antenna arrays/subarrays. One antenna panel may be controlled by one or more oscillators (oscillators). The radio frequency chain may also be referred to as a receive channel and/or a transmit channel, a receiver branch (receiver branch), or the like. One antenna panel may be driven by one radio frequency chain, or may be driven by a plurality of radio frequency chains. Therefore, the antenna panel in this application may alternatively be replaced with a radio frequency chain, a plurality of radio frequency chains that drive one antenna panel, or one or more radio frequency chains controlled by one oscillator.

### 9. Carrier component (carrier component, CC) and carrier aggregation:

Carrier aggregation (carrier aggregation, CA) means that a terminal device jointly uses a plurality of CCs, including CCs that are in-band contiguous, in-band non-contiguous, inter-band non-contiguous, and the like. CA can increase available bandwidth and reach a better transmission rate. In CA, a PDCCH and a PDSCH can be in a same CC or in different CCs, that is, inter-carrier scheduling is allowed. A CC, a bandwidth part (bandwidth part, BWP), the CC/the BWP, CC and/or the BWP may generally be equivalently replaced with each other because they all describe a frequency domain resource. The CC may also be equivalently replaced with a cell (cell). The BWP represents a segment of consecutive frequency domain resources. For example, the BWP may be understood as a segment of continuous frequency band, where the frequency band includes at least one continuous subband and each bandwidth part may correspond to a group of numerologies (numerologies). Different bandwidth parts may correspond to different numerologies.

### 10. Synchronization signal/physical broadcast channel block (synchronization signal/PBCH block, SS/PBCH block):

An SS/PBCH block may also be referred to as an SSB. PBCH is an abbreviation of a physical broadcast channel (physical broadcast channel). The SSB includes at least one of a primary synchronization signal (primary synchronization signal, PSS), a secondary synchronization signal (secondary synchronization signal, SSS), and a PBCH. The SSB is a signal mainly used for cell searching, cell synchronization, and carrying broadcast information.

### 11. Primary cell (primary cell, PCell):

The PCell is a cell on which a CA terminal device camps, and the CA terminal device corresponds to a physical uplink control channel (physical uplink control channel, PUCCH).

### 12. Primary secondary cell (primary secondary cell, PSCell):

The PSCell is a special secondary cell that is on a secondary eNodeB (secondary eNodeB, SeNB) and that is configured by a master eNodeB (master eNodeB, MeNB) for DC UE by using RRC connection signaling.

### 13. Secondary cell (secondary cell, SCell):

An SCell is a cell configured for the CA terminal device by using RRC connection signaling, works on an SCC (secondary component carrier), and may provide more radio resources for the CA terminal device. In the SCell, there may be downlink transmission only or both uplink and downlink transmission.

14. Downlink signal: The downlink signal may be a downlink data signal, for example, a downlink control channel signal or a downlink data channel signal; or may be a downlink reference signal, for example, a CSI-RS, a tracking reference signal (tracking reference signal, TRS), a demodulation reference signal (demodulation reference signal, DMRS), a corresponding tracking reference signal (corresponding tracking reference signal, PTRS), or a common reference signal (common reference signal, CRS).

15. Uplink signal: The uplink signal may be an uplink data signal, for example, an uplink control channel signal or an uplink data channel signal; or may be an uplink reference signal, for example, an SSB, a sounding reference signal (sounding reference signal, SRS), a DMRS, or a PTRS.

It should be noted that terms in the embodiments of this application may change with continuous development of technologies, but all of them fall within the protection scope of this application.

The technical solutions of the embodiments of this application may be applied to various communication systems, for example, a global system for mobile communications (global system of mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

A terminal device in the embodiments of this application may refer to user equipment, an access terminal device, a subscriber unit, a subscriber station, a mobile station, a mobile console, a remote station, a remote terminal device, a mobile device, a user terminal device, a terminal device, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in the embodiments of this application.

A network device in the embodiments of this application may be a device configured to communicate with the terminal device. The network device may be a base transceiver station (base transceiver station, BTS) in a global system for mobile communications (global system for mobile communications, GSM) or a code division multiple access (code division multiple access, CDMA) system, a NodeB (NodeB, NB) in a wideband code division multiple access (wideband code division multiple access, WCDMA) system, an evolved NodeB (evolved NodeB, eNB or eNodeB) in an LTE system, or a radio controller in a cloud radio access network (cloud radio access network, CRAN) scenario. Alternatively, the network device may be a relay node, an access point, a vehicle-mounted device, a wearable device, a network device in a future 5G network, a network device in a future evolved PLMN network, one or one group (including a plurality of antenna panels) of antenna panel of a base station in a 5G system, or may be a network node constituting a gNB or a transmission point, such as a baseband unit (baseband unit, BBU), or a distributed unit (distributed unit, DU). This is not limited in the embodiments of this application.

In some deployment, the gNB may include a centralized unit (centralized unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in a radio access network (radio access network, RAN), or the CU may be classified into a network device in a core network (core network, CN). This is not limited in this application.

In the embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant communication software. In addition, a specific structure of an execution body of a method provided in the embodiments of this application is not specifically limited in the embodiments of this application provided that a program that records code for the method provided in the embodiments of this application can be run to perform communication according to the method provided in the embodiments of this application. For example, the execution body of the method provided in the embodiments of this application may be the terminal device or the network device, or a function module that is in the terminal device or the network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable medium" may include but is not limited to a radio channel and various other media that can store, include, and/or carry instructions and/or data.

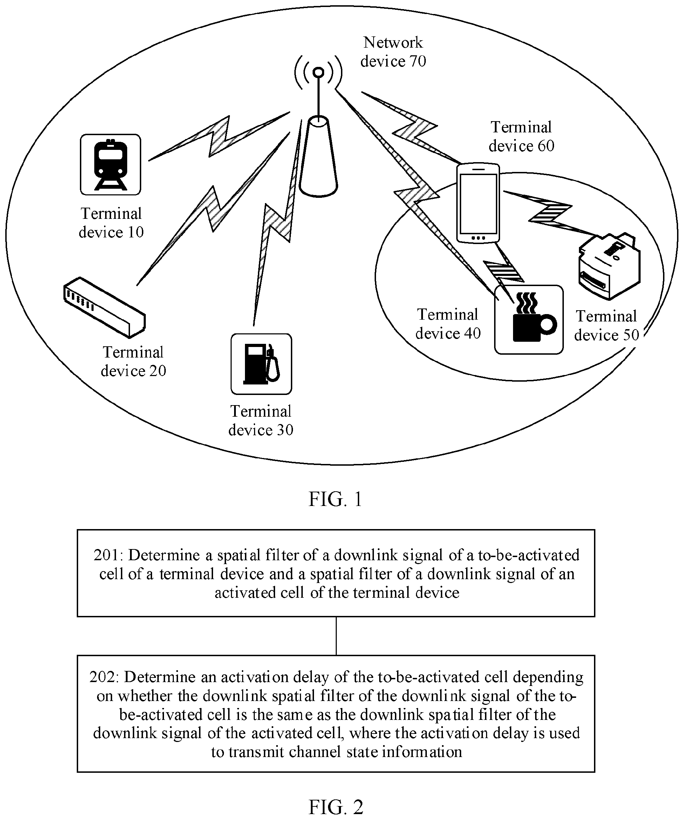

FIG. 1 is a schematic diagram of a communication system according to this application. The communication system in FIG. 1 may include at least one terminal device (for example, a terminal device 10, a terminal device 20, a terminal device 30, a terminal device 40, a terminal device 50, and a terminal device 60) and a network device 70. The network device 70 is configured to provide a communication service for the terminal device and enable the terminal device to access a core network. The terminal device may access a network by searching for a synchronization signal, a broadcast signal, or the like sent by the network device 70, to communicate with the network. The terminal device 10, the terminal device 20, the terminal device 30, the terminal device 40, and the terminal device 60 in FIG. 1 may perform uplink and downlink transmission with the network device 70. For example, the network device 70 may send downlink signals to the terminal device 10, the terminal device 20, the terminal device 30, the terminal device 40, and the terminal device 60, or may receive uplink signals sent by the terminal device 10, the terminal device 20, the terminal device 30, the terminal device 40, and the terminal device 60.

In addition, the terminal device 40, the terminal device 50, and the terminal device 60 may also be considered as a communication system. The terminal device 60 may send downlink signals to the terminal device 40 and the terminal device 50, or may receive uplink signals sent by the terminal device 40 and the terminal device 50.

It should be noted that the embodiments of this application may be applied to a communication system including one or more network devices, or may be applied to a communication system including one or more terminal devices. This is not limited in this application.

It should be understood that the communication system may include one or more network devices. One network device may send data or control signaling to one or more terminal devices. A plurality of network devices may also simultaneously send data or control signaling to one or more terminal devices.

In a conventional solution, a time window between the terminal device and the network device may be determined with reference to whether a frequency range to which the secondary cell currently belongs is known, or may be determined with reference to a frequency range to which the secondary cell currently belongs and whether there is another activated cell in the frequency range to which the secondary cell belongs. Different activation scenarios correspond to different time lengths (also referred to as "activation delays") of time windows, so that the terminal device and the network device can transmit CSI within a proper activation delay. In this way, an activation success rate of the cell is improved when power consumption overheads of a device are ensured.

It should be noted that R15 supports two frequency ranges: a low frequency (FR1) and a high frequency (FR2). A frequency range of the FR1 is 450 MHz to 6000 MHz, an antenna array scale is small, and an output analog beam is wide. A frequency range of the FR2 is 24250 MHz to 52600 MHz, an antenna array scale is large, and an output analog beam is narrow. The network device uses different radio frequency channels for the FR1 and the FR2.

FIG. 2 is a schematic diagram of a method for determining a cell activation delay according to an embodiment of this application.

It should be noted that an execution body of this embodiment of this application may be a terminal device, or may be a network device.

201: Determine a spatial filter of a downlink signal of a to-be-activated cell of the terminal device and a spatial filter of a downlink signal of an activated cell of the terminal device.

Specifically, the terminal device may determine the spatial filter of the downlink signal of the to-be-activated cell of the terminal device, and determine the spatial filter of the downlink signal of the activated cell of the terminal device. Alternatively, the network device may determine a spatial filter of a downlink signal of a to-be-activated cell of a terminal device and a spatial filter of a downlink signal of an activated cell of the terminal device.

It should be noted that the downlink signal may be a downlink pilot signal, or may be downlink data. The downlink pilot signal may be at least one of an SSB, a CSI-RS, a PTRS, a TRS, a DMRS, or a CRS. The downlink data may be a physical downlink shared channel (physical downlink shared channel, PDSCH) or a physical downlink broadcast channel (physical downlink broadcast channel, PBCH).

It should be further noted that the activated cell may be a PCell, a PSCell, or an SCell.

It should be understood that the activated cell may be understood as a cell that can currently provide a service for the terminal device, a cell that is in a radio resource control (radio resource control, RRC) connection to the terminal device, or a cell that can communicate with the terminal device.

It should be further understood that the activated cell may also be referred to as an activated CC, a serving cell, an activated serving cell, or a serving CC. This is not limited in this application.

Optionally, before step 201, the terminal device may receive activation signaling, where the activation signaling is used to indicate the terminal device to activate the to-be-activated cell. In other words, the to-be-activated cell is a cell that the network device intends to activate. Correspondingly, the network device sends the activation signaling.

Optionally, the spatial filter may be a spatial sending filter and a spatial receiving filter, the spatial filter may be the spatial sending filter, or the spatial filter may be the spatial receiving filter.

Optionally, an operating frequency of the to-be-activated cell belongs to a frequency range 1 or a frequency range 2.

Specifically, the frequency range 1 is the FR1, and the frequency range 2 is the FR2. In other words, the operating frequency of the to-be-activated cell in this embodiment of this application may belong to the FR1, or may belong to the FR2.

It should be understood that the operating frequency of the to-be-activated cell may alternatively belong to another frequency range. This is not limited in this application.

Optionally, an operating frequency of the activated cell belongs to the frequency range 1 or the frequency range 2.

Specifically, the operating frequencies of the activated cell and the to-be-activated cell may belong to a same frequency range, or may belong to different frequency ranges.

Optionally, the operating frequency of the to-be-activated cell and the operating frequency of the activated cell may be in a same frequency band, or may be in different frequency bands.

It should be understood that one frequency range may include one or more frequency bands.

202: Determine an activation delay of the to-be-activated cell depending on whether the downlink spatial filter of the downlink signal of the to-be-activated cell is the same as the downlink spatial filter of the downlink signal of the activated cell, where the activation delay is used to transmit channel state information.

Specifically, in this embodiment of this application, the terminal device or the network device may determine the activation delay corresponding to the to-be-activated cell based on that the downlink spatial filter of the downlink signal of the to-be-activated cell and the downlink spatial filter of the downlink signal of the activated cell are the same or different. In this way, the terminal device sends the CSI within the activation delay. The network device is to receive the CSI within the activation delay, and determines, depending on whether the CSI is received, whether the to-be-activated cell is successfully activated. In other words, in this embodiment of this application, the terminal device and the network device can determine a proper activation delay, to avoid a case in which the terminal device and the network device mistakenly determine, due to an excessively long or excessively short activation delay, whether a secondary cell is successfully activated. In this way, an activation success rate of the cell is improved when the power consumption overheads of the device are ensured.

It should be noted that the activation delay may be considered as a period of time. The terminal device may consider a moment at which the activation signaling for activating the to-be-activated cell is received as a start moment of the activation delay. The network device may consider a moment at which the activation signaling for activating the to-be-activated cell is sent as the start moment of the activation delay.

In an embodiment, when the spatial filter is the spatial sending filter or the spatial receiving filter, step 202 may be specifically at least one of the following: if the spatial filter of the downlink signal of the to-be-activated cell is the same as the spatial filter of the downlink signal of the activated cell, the activation delay of the to-be-activated cell may be a first delay; or if the spatial filter of the downlink signal of the to-be-activated cell is different from the spatial filter of the downlink signal of the activated cell, the activation delay of the to-be-activated cell may be a second delay. The first delay is different from the second delay.

In another embodiment, step 202 may be specifically: The terminal device and the network device may further determine the activation delay of the to-be-activated cell with reference to whether there is an activated cell of the terminal device in a frequency range to which the operating frequency of the to-be-activated cell belongs, and whether the spatial filter of the downlink signal of the to-be-activated cell is the same as the spatial filter of the downlink signal of the activated cell.

Specifically, when determining the activation delay of the to-be-activated cell, the UE needs to consider at least one of the following processing: cell detection, beam measurement, beam measurement result reporting, radio frequency channel parameter setting, automatic gain control (automatic gain control, AGC) adjustment, downlink time-frequency domain synchronization, valid CSI measurement and reporting, and the like.

Specifically, the determining an activation delay of the to-be-activated cell may be at least one of the following:

If the spatial filter of the downlink signal of the to-be-activated cell is the same as the spatial filter of the downlink signal of the activated cell, and there is at least one activated cell of the terminal device in the frequency range to which the to-be-activated cell belongs, the activation delay of the to-be-activated cell is a first delay. In this case, the UE may determine, based on measurement information of the activated cell, a serving beam, cell frequency domain information, cell timing synchronization information, and/or a radio frequency channel parameter setting that are of the to-be-activated cell.

If the spatial filter of the downlink signal of the to-be-activated cell is the same as the spatial filter of the downlink signal of the activated cell, and there is no activated cell of the terminal device in the frequency range to which the to-be-activated cell belongs, the activation delay of the to-be-activated cell is a second delay. In this case, the UE may determine a serving beam of the to-be-activated cell based on measurement information of the activated cell.

If the spatial filter of the downlink signal of the to-be-activated cell is different from the spatial filter of the downlink signal of the activated cell, and there is at least one activated cell of the terminal device in the frequency range to which the to-be-activated cell belongs, the activation delay of the to-be-activated cell is a third delay. In this case, the UE may determine, based on measurement information of the activated cell, cell frequency domain information, cell timing synchronization information, and/or a radio frequency channel parameter setting that are of the to-be-activated cell.

If the spatial filter of the downlink signal of the to-be-activated cell is different from the spatial filter of the downlink signal of the activated cell, and there is no activated cell of the terminal device in the frequency range to which the to-be-activated cell belongs, the activation delay of the to-be-activated cell is a fourth delay.

All or some of the first delay, the second delay, the third delay, and the fourth delay may be different. In other words, scenarios can be divided in more detail in this embodiment of this application, so that a more proper activation delay can be determined. In this way, the activation success rate of the cell is further improved when the power consumption overheads of the device are ensured.

It should be understood that the "first delay" in this embodiment of this application may be the same as or different from a "first delay" in another embodiment; the "second delay" in this embodiment of this application may be the same as or different from a "second delay" in another embodiment. This is not limited in this application.

It should be noted that when there is at least one activated cell of the terminal device in the frequency range to which the to-be-activated cell belongs, the activated cell corresponding to the spatial filter that is of the downlink signal and that is the same as or different from the spatial filter of the downlink signal of the to-be-activated cell may be any one of the at least one activated cell, or may not be any one of the at least one activated cell. This is not limited in this application.

For example, the first delay T1=[N1^{∗}T_{SMTC_SCell}+a], the second delay T2=[N2^{∗}T_{SMTC_SCell}+a], the third delay T3=[N3^{∗}T_{SMTC_SCell}+a], and the fourth delay T4=[N4^{∗}T_{SMTC_SCell}+a]. N1≠N2≠N3≠N4.

Optionally, a relationship between N1, N2, N3, and N4 may be N1>N2>N3>N4.

It should be noted that the relationship between N1, N2, N3, and N4 may alternatively be N1<N2<N3<N4, N1<N4<N3<N2, N2<N1<N3<N4, or another value relationship. The relationships are not enumerated one by one herein in this application, but any value relationship falls within the protection scope of this application.

Optionally, a value of a is 5 ms. Optionally, N1=1, N2=7, N3=9, and N4=25.

It should be understood that the T_{SMTC_SCell} is a synchronization signal block measurement timing configuration (SSB measurement timing configuration, SMTC) periodicity configured for the to-be-activated cell, for example, 5 ms, 10 ms, 20 ms, or another integer. The value of a may alternatively be 3, 4, 6, 7, or another integer. This is not limited in this application.

It should be noted that the spatial filter may be the spatial sending filter or the spatial receiving filter. To be specific, all terms "spatial filter" in this embodiment of this application may be replaced with terms "spatial sending filter", or all terms "spatial filter" may be replaced with terms "spatial receiving filter".

In an embodiment, when the spatial filter is the spatial sending filter and the spatial receiving filter, step 202 may be specifically at least one of the following:
when a spatial sending filter of the downlink signal of the to-be-activated cell is the same as a spatial sending filter of the downlink signal of the activated cell, and a spatial receiving filter of the downlink signal of the to-be-activated cell is the same as a spatial receiving filter of the downlink signal of the activated cell, determining that the activation delay of the to-be-activated cell is a first delay;
when a spatial sending filter of the downlink signal of the to-be-activated cell is the same as a spatial sending filter of the downlink signal of the activated cell, and a spatial receiving filter of the downlink signal of the to-be-activated cell is different from a spatial receiving filter of the downlink signal of the activated cell, determining that the activation delay of the to-be-activated cell is a second delay;
when a spatial sending filter of the downlink signal of the to-be-activated cell is different from a spatial sending filter of the downlink signal of the activated cell, and a spatial receiving filter of the downlink signal of the to-be-activated cell is the same as a spatial receiving filter of the downlink signal of the activated cell, determining that the activation delay of the to-be-activated cell is a third delay; or
when a spatial sending filter of the downlink signal of the to-be-activated cell is different from a spatial sending filter of the downlink signal of the activated cell, and a spatial receiving filter of the downlink signal of the to-be-activated cell is different from a spatial receiving filter of the downlink signal of the activated cell, determining that the activation delay of the to-be-activated cell is a fourth delay.

Specifically, the terminal device or the network device may determine the activation delay of the to-be-activated cell depending on whether the spatial sending filter of the downlink signal of the to-be-activated cell is the same as the spatial sending filter of the downlink signal of the to-be-activated cell, and whether the spatial receiving filter of the downlink signal of the to-be-activated cell is the same as the spatial receiving filter of the downlink signal of the to-be-activated cell. All or some of the first delay, the second delay, the third delay, and the fourth delay may be different.

It should be understood that the "first delay" in this embodiment of this application may be the same as or different from a "first delay" in another embodiment; the "second delay" in this embodiment of this application may be the same as or different from a "second delay" in another embodiment; the "third delay" in this embodiment of this application may be the same as or different from a "third delay" in another embodiment; the "fourth delay" in this embodiment of this application may be the same as or different from a "fourth delay" in another embodiment. This is not limited in this application.

In another embodiment, when the downlink spatial filter is the downlink spatial sending filter and the downlink spatial receiving filter, step 202 may be specifically: The terminal device or the network device may further determine the activation delay of the to-be-activated cell depending on whether the downlink spatial sending filter of the downlink signal of the to-be-activated cell is the same as the downlink spatial sending filter of the downlink signal of the activated cell, and whether the downlink spatial receiving filter of the downlink signal of the to-be-activated cell is the same as the downlink spatial receiving filter of the downlink signal of the activated cell, and with reference to whether there is an activated cell of the terminal device in a frequency range to which the to-be-activated cell belongs.

Specifically, the determining an activation delay of the to-be-activated cell may be at least one of the following:
when the downlink spatial sending filter of the downlink signal of the to-be-activated cell is the same as the downlink spatial sending filter of the downlink signal of the activated cell, the downlink spatial receiving filter of the downlink signal of the to-be-activated cell is the same as the downlink spatial receiving filter of the downlink signal of the activated cell, and there is an activated cell of the terminal device in the frequency range to which the to-be-activated cell belongs, determining that the activation delay of the to-be-activated cell is a first delay;
when the downlink spatial sending filter of the downlink signal of the to-be-activated cell is different from the downlink spatial sending filter of the downlink signal of the activated cell, the downlink spatial receiving filter of the downlink signal of the to-be-activated cell is the same as the downlink spatial receiving filter of the downlink signal of the activated cell, and there is an activated cell of the terminal device in the frequency range to which the to-be-activated cell belongs, determining that the activation delay of the to-be-activated cell is a second delay;
when the downlink spatial sending filter of the downlink signal of the to-be-activated cell is the same as the downlink spatial sending filter of the downlink signal of the activated cell, the downlink spatial receiving filter of the downlink signal of the to-be-activated cell is different from the downlink spatial receiving filter of the downlink signal of the activated cell, and there is an activated cell of the terminal device in the frequency range to which the to-be-activated cell belongs, determining that the activation delay of the to-be-activated cell is a third delay;
when the downlink spatial sending filter of the downlink signal of the to-be-activated cell is different from the downlink spatial sending filter of the downlink signal of the activated cell, the downlink spatial receiving filter of the downlink signal of the to-be-activated cell is different from the downlink spatial receiving filter of the downlink signal of the activated cell, and there is an activated cell of the terminal device in the frequency range to which the to-be-activated cell belongs, determining that the activation delay of the to-be-activated cell is a fourth delay;
when the downlink spatial sending filter of the downlink signal of the to-be-activated cell is the same as the downlink spatial sending filter of the downlink signal of the activated cell, the downlink spatial receiving filter of the downlink signal of the to-be-activated cell is the same as the downlink spatial receiving filter of the downlink signal of the activated cell, and there is no activated cell of the terminal device in the frequency range to which the to-be-activated cell belongs, determining that the activation delay of the to-be-activated cell is a fifth delay;
when the downlink spatial sending filter of the downlink signal of the to-be-activated cell is different from the downlink spatial sending filter of the downlink signal of the activated cell, the downlink spatial receiving filter of the downlink signal of the to-be-activated cell is the same as the downlink spatial receiving filter of the downlink signal of the activated cell, and there is no activated cell of the terminal device in the frequency range to which the to-be-activated cell belongs, determining that the activation delay of the to-be-activated cell is a sixth delay;
when the downlink spatial sending filter of the downlink signal of the to-be-activated cell is the same as the downlink spatial sending filter of the downlink signal of the activated cell, the downlink spatial receiving filter of the downlink signal of the to-be-activated cell is different from the downlink spatial receiving filter of the downlink signal of the activated cell, and there is no activated cell of the terminal device in the frequency range to which the to-be-activated cell belongs, determining that the activation delay of the to-be-activated cell is a seventh delay; or
when the downlink spatial sending filter of the downlink signal of the to-be-activated cell is different from the downlink spatial sending filter of the downlink signal of the activated cell, the downlink spatial receiving filter of the downlink signal of the to-be-activated cell is different from the downlink spatial receiving filter of the downlink signal of the activated cell, and there is no activated cell of the terminal device in the frequency range to which the to-be-activated cell belongs, determining that the activation delay of the to-be-activated cell is an eighth delay.

Optionally, all or some of the first delay, the second delay, the third delay, the fourth delay, the fifth delay, the sixth delay, the seventh delay, and the eighth delay may be different.

It should be understood that the "first delay" in this embodiment of this application may be the same as or different from a "first delay" in another embodiment; the "second delay" in this embodiment of this application may be the same as or different from a "second delay" in another embodiment; the "third delay" in this embodiment of this application may be the same as or different from a "third delay" in another embodiment; the "fourth delay" in this embodiment of this application may be the same as or different from a "fourth delay" in another embodiment; the "fifth delay" in this embodiment of this application may be the same as or different from a "fifth delay" in another embodiment; the "sixth delay" in this embodiment of this application may be the same as or different from a "sixth delay" in another embodiment; the "seventh delay" in this embodiment of this application may be the same as or different from a "seventh delay" in another embodiment; the "eighth delay" in this embodiment of this application may be the same as or different from an "eighth delay" in another embodiment. This is not limited in this application.

For example, the first delay T1=[N1^{∗}T_{SMTC_SCell}+a], the second delay T2=[N2^{∗}T_{SMTC_SCell}+a], the third delay T3=[N3^{∗}T_{SMTC_SCell}+a], the fourth delay T4=[N4^{∗}T_{SMTC_SCell}+a], the fifth delay T5=[NS^{∗}T_{SMTC_SCell}+a], the sixth delay T6=[N6^{∗}T_{SMTC_SCell}+a], the seventh delay T7=[N7^{∗}T_{SMTC_SCell}+a], and the eighth delay T8=[N8^{∗}T_{SMTC_SCell}+a]. N1≠N2≠N3≠N4≠N5≠N6≠N7≠N8.

Optionally, a relationship between N1, N2, N3, N4, N5, N6, N7, and N8 may be specifically N1>N2>N3>N4>N5>N6>N7>N8.

It should be noted that the relationship between N1, N2, N3, N4, N5, N6, N7, and N8 may alternatively be N1<N2<N3<N4<N5<N6<N7<N8, N1<N8<N4<N5<N3<N7<N2<N6, N2<N1<N3<N4<N6<N7<N5<N8, or another value relationship. The relationships are not enumerated one by one herein in this application, but any value relationship falls within the protection scope of this application.

The another value relationship is not limited in this application.

Optionally, a value of a is 5 ms.

It should be understood that the T_{SMTC_SCell} is an SMTC periodicity configured for the to-be-activated cell. The value of a may alternatively be 3, 4, 6, 7, or another integer. This is not limited in this application.

It should be further understood that a condition for determining the activation delay of the to-be-activated cell may be considered as a scenario. In other words, in this embodiment of this application, different scenarios correspond to different activation delays.

Optionally, the terminal device or the network device may determine whether the spatial sending filter of the downlink signal of the to-be-activated cell is the same as the spatial sending filter of the downlink signal of the activated cell depending on whether the operating frequencies of the to-be-activated cell and the activated cell belong to a same frequency range or a same frequency band.

Specifically, if the to-be-activated cell and the activated cell belong to the same frequency range or the same frequency band, the spatial sending filter of the downlink signal of the to-be-activated cell is the same as the spatial sending filter of the downlink signal of the activated cell. If the to-be-activated cell and the activated cell do not belong to the same frequency range or the same frequency band, the spatial sending filter of the downlink signal of the to-be-activated cell is different from the spatial sending filter of the downlink signal of the activated cell. In this way, the terminal device or the network device can further determine a corresponding activation delay, in other words, the terminal device or the network device can transmit the channel state information within a proper activation delay. In this way, an activation success rate of the cell is improved when power consumption overheads of the device are ensured.

Optionally, the terminal device or the network device may determine whether the spatial sending filter of the downlink signal of the to-be-activated cell is the same as the spatial sending filter of the downlink signal of the activated cell depending on whether the to-be-activated cell and the activated cell share a radio frequency channel.

Specifically, if the to-be-activated cell and the activated cell share the radio frequency channel, the spatial sending filter of the downlink signal of the to-be-activated cell is the same as the spatial sending filter of the downlink signal of the activated cell. If the to-be-activated cell and the activated cell do not share the radio frequency channel, that is, radio frequency channels are independent of each other, the spatial sending filter of the downlink signal of the to-be-activated cell is different from the spatial sending filter of the downlink signal of the activated cell. In this way, the terminal device or the network device can further determine a corresponding activation delay, in other words, the terminal device or the network device can transmit the channel state information within a proper activation delay. In this way, an activation success rate of the cell is improved when power consumption overheads of the device are ensured.

Optionally, the terminal device or the network device may determine whether the spatial sending filter of the downlink signal of the to-be-activated cell is the same as the spatial sending filter of the downlink signal of the activated cell depending on whether a frequency spacing between the operating frequency of the to-be-activated cell and the operating frequency of the activated cell is greater than or equal to a preset threshold.

Specifically, if the frequency spacing between the operating frequency of the to-be-activated cell and the operating frequency of the activated cell is greater than or equal to the preset threshold, the spatial sending filter of the downlink signal of the to-be-activated cell is different from the spatial sending filter of the downlink signal of the activated cell. If the frequency spacing between the operating frequency of the to-be-activated cell and the operating frequency of the activated cell is less than the preset threshold, the spatial sending filter of the to-be-activated cell is the same as the spatial sending filter of the downlink signal of the activated cell. In this way, the terminal device or the network device can further determine a corresponding activation delay, in other words, the terminal device or the network device can transmit the channel state information within a proper activation delay. In this way, an activation success rate of the cell is improved when power consumption overheads of the device are ensured.

It should be noted that the preset threshold may be configured by the network device, may be agreed upon by the network device and the terminal device in advance, or may be specified in a protocol.

It should be further noted that a manner of determining whether the spatial sending filter of the to-be-activated cell is the same as the spatial sending filter of the downlink signal of the activated cell may be specified in a protocol, or may be determined by the network device and configured for the terminal device, or may be determined by the terminal device and reported to the network device. This is not limited in this application.

Optionally, the terminal device or the network device may further determine whether the spatial sending filter of the downlink signal of the to-be-activated cell is the same as the spatial sending filter of the downlink signal of the activated cell with reference to at least two of whether the operating frequencies of the to-be-activated cell and the activated cell belong to a same frequency range (or a same frequency band), whether the to-be-activated cell and the activated cell share a radio frequency channel, and whether a frequency spacing between the operating frequency of the to-be-activated cell and the operating frequency of the activated cell is greater than or equal to a preset threshold.

Specifically, when determining that two or three conditions are satisfied, the terminal device or the network device determines that the spatial sending filter of the downlink signal of the to-be-activated cell is the same as the spatial sending filter of the downlink signal of the activated cell. Alternatively, when determining that none of the foregoing conditions is satisfied, the terminal device or the network device determines that the spatial sending filter of the downlink signal of the to-be-activated cell is different from the spatial sending filter of the downlink signal of the activated cell. Other combination forms also fall within the protection scope of this application.

Optionally, the terminal device may determine whether the spatial sending filter of the to-be-activated cell is the same as the spatial sending filter of the downlink signal of the activated cell, and report a determining result to the network device.

Specifically, a reporting manner may be directly reporting, to be specific, reporting information includes attributes of the spatial sending filter of the to-be-activated cell and the spatial sending filter of the downlink signal of the activated cell. Alternatively, a reporting manner is indirect reporting, to be specific, reporting information may include the conditions for determining the activation delay. Therefore, the activation delay that is of the to-be-activated cell and that is determined by the network device based on the conditions for determining the activation delay is consistent with the activation delay determined by the terminal device.

For example, the attributes of the spatial sending filter of the to-be-activated cell and the spatial sending filter of the downlink signal of the activated cell may be represented by using a value of at least one bit. A first value (for example, "0") of the at least one bit indicates that the spatial sending filter of the to-be-activated cell is the same as spatial sending filters of all activated cells of the terminal device; a second value (for example, "1") of the at least one bit indicates that the spatial sending filter of the to-be-activated cell is the same as a spatial sending filter of at least one activated cell of the terminal device; a third value (for example, "2") of the at least one bit indicates that the spatial sending filter of the to-be-activated cell is the same as the spatial sending filter of the at least one activated cell of the terminal device, and a frequency range to which the to-be-activated cell belongs is the same as a frequency range to which the at least one activated cell belongs.

For another example, the reporting information includes an activation scenario, and the activation scenario corresponds to a condition for determining the activation delay. The network device may determine, based on the activation scenario, the condition for determining the activation delay of the to-be-activated cell, and further determine the activation delay of the to-be-activated cell. It should be understood that the activation scenario may be determined by using a value of at least one bit.

Optionally, the network device may further determine whether the spatial sending filter of the to-be-activated cell is the same as the spatial sending filter of the downlink signal of the activated cell, and send configuration information, to configure the terminal device to determine, in a same manner, whether the spatial sending filter of the to-be-activated cell is the same as the spatial sending filter of the downlink signal of the activated cell.

Specifically, the configuration information may indicate the activation scenario, or may indicate the condition for determining the activation delay.

For example, different values of at least one field in the configuration information may indicate different activation scenarios. In this way, the terminal device may learn of a current activation scenario based on the configuration information. For example, a first value (for example, "0") of the at least one field in the configuration information indicates an activation scenario 1, and a second value (for example, "1") of the at least one field in the configuration information indicates an activation scenario 2.

For another example, the configuration information may indicate an attribute of a downlink spatial sending filter of a downlink signal of each of all cells of the terminal device. Specifically, the network device may further divide cells corresponding to a same spatial sending filter of a downlink signal into a same group, and divide cells corresponding to different spatial sending filters of the downlink signals into different groups.

For another example, the configuration information may configure the preset threshold. The terminal device and the network device determine the frequency spacing between the operating frequency of the to-be-activated cell and the operating frequency of the activated cell based on the preset threshold, and determine the activation delay of the to-be-activated cell.

It should be noted that the configuration information may be carried in the activation signaling.

Therefore, according to the method for determining a cell activation delay in this embodiment of this application, the terminal device or the network device can determine the activation delay corresponding to the to-be-activated cell based on that the downlink spatial filter of the downlink signal of the to-be-activated cell and the downlink spatial filter of the downlink signal of the activated cell are the same or different. In this way, the terminal device sends the CSI within the activation delay. The network device is to receive the CSI within the activation delay, and determines, depending on whether the CSI is received, whether the to-be-activated cell is successfully activated. In other words, in this embodiment of this application, the terminal device and the network device can determine a proper activation delay, to avoid a case in which the terminal device and the network device mistakenly determine, due to an excessively long or excessively short activation delay, whether a secondary cell is successfully activated. In this way, an activation success rate of the cell is improved when the power consumption overheads of the device are ensured.

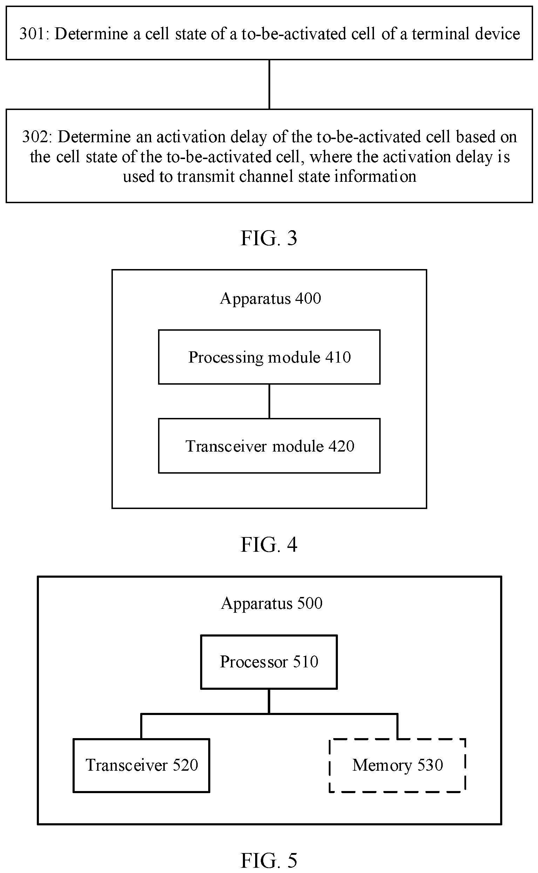

FIG. 3 is a schematic diagram of a method for determining a cell activation delay according to another embodiment of this application.

It should be noted that an execution body of this embodiment of this application may be a terminal device, or may be a network device.

It should be further noted that, unless otherwise specified, same terms in this embodiment of this application and the embodiment shown in FIG. 2 have a same meaning.

301: Determine a cell state of a to-be-activated cell of a terminal device.

Optionally, the cell state may include at least one of whether the cell is known, synchronization information, whether a serving beam is known, a beam reception capability of the terminal device, and whether the channel state information is known.

Specifically, whether the serving beam is known means whether a beam used to serve the terminal device for communication is known. The cell is unknown may mean that the terminal device needs to perform cell detection. The cell is known may mean that the terminal device does not need to perform cell detection. The cell detection means that the terminal device needs to perform blind cell detection on a time-frequency resource.

Optionally, the synchronization information includes at least one of whether an operating frequency is known, whether a downlink timing is known, and whether an uplink timing is known.

Specifically, the synchronization information may include whether a specific location of the operating frequency of the to-be-activated cell is known.

Optionally, the beam reception capability of the terminal device may include at least one of whether the terminal device supports multi-beam sweeping reception, whether the terminal device supports wide beam reception, and whether the terminal device supports SSB symbol-level beam reception.

Optionally, the to-be-activated cell may belong to a frequency range 1 or a frequency range 2. In other words, the to-be-activated cell in this embodiment of this application may belong to the FR1, or may belong to the FR2.

It should be understood that the to-be-activated cell may alternatively belong to another frequency range. This is not limited in this application.

Optionally, before step 301, the terminal device may receive activation signaling, where the activation signaling is used to activate the to-be-activated cell. In other words, the to-be-activated cell is a cell that the network device intends to activate. Correspondingly, the network device sends the activation signaling.

302: Determine an activation delay of the to-be-activated cell based on the cell state of the to-be-activated cell, where the activation delay is used to transmit channel state information.

Specifically, the terminal device or the network device may determine a corresponding activation delay based on the cell state of the to-be-activated cell. In other words, different cell states may correspond to different activation delays. In this way, the terminal device sends the CSI within the activation delay determined based on the cell state. The network device is to receive the CSI within the activation delay, and determines, depending on whether the CSI is received, whether the to-be-activated cell is successfully activated. In this embodiment of this application, the terminal device and the network device can determine a proper activation delay, to avoid a case in which the terminal device and the network device mistakenly determine, due to an excessively long or excessively short activation delay, whether a secondary cell is successfully activated. In this way, an activation success rate of the cell is improved when the power consumption overheads of the device are ensured.

Optionally, step 302 may be specifically at least one of the following:
when the to-be-activated cell is in a state in which the cell is unknown, and the serving beam is unknown, determining that the activation delay of the to-be-activated cell is a first delay;
when the to-be-activated cell is in a state in which the cell is unknown, the serving beam is unknown, and the terminal device supports multi-beam sweeping reception, determining that the activation delay of the to-be-activated cell is a second delay;
when the to-be-activated cell is in a state in which the cell is unknown, the serving beam is unknown, and the terminal device supports wide beam reception, determining that the activation delay of the to-be-activated cell is a third delay;
when the to-be-activated cell is in a state in which the cell is known, and the serving beam is unknown, determining that the activation delay of the to-be-activated cell is a fourth delay;
when the to-be-activated cell is in a state in which the cell is known, and the serving beam is known, determining that the activation delay of the to-be-activated cell is a fifth delay; or
when the to-be-activated cell is in a state in which the cell is known, the serving beam is known, and the channel state information is unknown, determining that the activation delay of the to-be-activated cell is a sixth delay.

For example, the first delay T1=[N1^{∗}T_{SMTC_SCell}+a], the second delay T2=[N2^{∗}T_{SMTC_SCell}+a], the third delay T3=[N3^{∗}T_{SMTC_SCell}+a], the fourth delay T4=[N4^{∗}T_{SMTC_SCell}+a], the fifth delay T5=[NS^{∗}T_{SMTC_SCell}+a], and the sixth delay T6=[N6^{∗}T_{SMTC_SCell}+a]. N1≠N2≠N3≠N4≠N5≠N6.

Optionally, a relationship between N1, N2, N3, N4, N5, and N6 may be N1>N2>N3>N4>N5>N6.

It should be noted that the relationship between N1, N2, N3, N4, N5, and N6 may alternatively be N1<N2<N3<N4<N5<N6, N1<N6<N4<N5<N3<N2, N2<N1<N3<N4<N6<N5, or another value relationship. The relationships are not enumerated one by one herein in this application, but any value relationship falls within the protection scope of this application.

Optionally, a value of a is 5 ms.

It should be understood that the T_{SMTC_SCell} is an SMTC periodicity configured for the to-be-activated cell. The value of a may alternatively be 3, 4, 6, 7, or another integer. This is not limited in this application.

Optionally, there may be a mapping relationship between the cell state and the activation delay, and the terminal device or the network device may determine the activation delay of the to-be-activated cell based on the mapping relationship.

It should be understood that the mapping relationship may be specified in a protocol, or may be set and notified to the terminal device by the network device. Alternatively, the mapping relationship may be set and notified to the network device by the terminal device. This is not limited in this application.

Optionally, the terminal device or the network device may determine, depending on whether the at least one activated cell and the to-be-activated cell belong to a same frequency range or a same frequency band, whether the cell is known and/or whether the serving beam is known in a state of the to-be-activated cell.

Specifically, when the to-be-activated cell and at least one activated cell belong to a same frequency range or a same frequency band, a cell state of the to-be-activated cell is that the cell is known; a cell state of the to-be-activated cell is that the serving beam is known; or a cell state of the to-be-activated cell is that the cell is known and the serving beam is known. When the to-be-activated cell and all activated cells of the terminal device do not belong to a same frequency range or a same frequency band, a cell state of the to-be-activated cell is that the cell is unknown; a cell state of the to-be-activated cell is that the serving beam is unknown; or a cell state of the to-be-activated cell is that the cell is unknown and the serving beam is unknown.

It should be understood that the at least one activated cell may be some activated cells or all activated cells of the terminal device.

Optionally, the terminal device or the network device may determine, depending on whether a spatial filter of a downlink signal of the at least one activated cell is the same as a spatial filter of a downlink signal of the to-be-activated cell, whether the cell is known and/or whether the serving beam is known in a state of the to-be-activated cell.

Specifically, when the spatial filter of the downlink signal of the at least one activated cell is the same as the spatial filter of the downlink signal of the to-be-activated cell, a cell state of the to-be-activated cell is that the cell is known; a cell state of the to-be-activated cell is that the serving beam is known; or a cell state of the to-be-activated cell is that the serving beam is known and the cell is known. When the spatial filter of the downlink signal of the at least one activated cell is not the same as the spatial filter of the downlink signal of the to-be-activated cell, a cell state of the to-be-activated cell is that the cell is unknown; a cell state of the to-be-activated cell is that the serving beam is unknown; or a cell state of the to-be-activated cell is that the cell is unknown and the serving beam is unknown.

It should be noted that the spatial filter is a spatial sending filter and/or a spatial receiving filter. When the spatial filter is a spatial sending filter and a spatial receiving filter, if a spatial sending filter of the downlink signal of the activated cell is different from a spatial sending filter of the downlink signal of the to-be-activated cell, and a spatial receiving filter of the downlink signal of the activated cell is the same as a spatial receiving filter of the downlink signal of the to-be-activated cell, the spatial filter of the downlink signal of the activated cell is different from the spatial filter of the downlink signal of the to-be-activated cell; if a spatial sending filter of the downlink signal of the activated cell is the same as a spatial sending filter of the downlink signal of the to-be-activated cell, and a spatial receiving filter of the downlink signal of the activated cell is different from a spatial receiving filter of the downlink signal of the to-be-activated cell, the spatial filter of the downlink signal of the activated cell is different from the spatial filter of the downlink signal of the to-be-activated cell; or if a spatial sending filter of the downlink signal of the activated cell is different from a spatial sending filter of the downlink signal of the to-be-activated cell, and a spatial receiving filter of the downlink signal of the activated cell is different from a spatial receiving filter of the downlink signal of the to-be-activated cell, the spatial filter of the downlink signal of the activated cell is different from the spatial filter of the downlink signal of the to-be-activated cell.

Optionally, within a preset time period before transmitting activation signaling, the terminal device or the network device may determine, depending on whether the terminal device has reported a channel or beam measurement result of the to-be-activated cell, whether the cell is known and/or whether the serving beam is known in the state of the to-be-activated cell.

Specifically, depending on whether the terminal device has reported a measurement result of the to-be-activated cell within a preset time period of receiving the activation signaling, the terminal device may determine, whether the cell is known and/or whether the serving beam is known in the state of the to-be-activated cell. The network device may determine, depending on whether the network device has received, within a preset time period after sending the activation signaling, the measurement result sent by the terminal device, whether the cell is known and/or whether the serving beam is known in the state of the to-be-activated cell. The terminal device is used as an example for description, if the terminal device has reported the measurement result of the to-be-activated cell, the cell state of the to-be-activated cell is that the cell is known, the cell state of the to-be-activated cell is that the serving beam is known, or the cell state of the to-be-activated cell is that the cell is known and the serving beam is known; or if the terminal device has not reported the measurement result of the to-be-activated cell, the cell state of the to-be-activated cell is that the cell is unknown, the cell state of the to-be-activated cell is that the serving beam is unknown, or the cell state of the to-be-activated cell is that the cell is unknown and the serving beam is unknown.

It should be understood that the preset time period may be specified in a protocol, or may be set and notified to the terminal device by the network device. Alternatively, the mapping relationship may be set and notified to the network device by the terminal device. This is not limited in this application.

It should be further understood that in this embodiment of this application, the measurement result may be limited to a valid measurement result, or whether the measurement result is valid may not be limited. This is not limited in this application.

It should be noted that the measurement result may be at least one of an SSB ID, a CRI, an L1-SINR, reference signal received power (reference signal received power, RSRP), reference signal received quality (reference signal received quality, RSRQ), a signal to interference and noise ratio (signal to interference and noise ratio, SINR), a CQI, an RI, and a PMI.

Optionally, the determining the cell state may be specified in a protocol, or may be set and notified to the terminal device by the network device. Alternatively, the determining the cell state may be set and notified to the network device by the terminal device.

Optionally, the terminal device may determine the cell state of the to-be-activated cell, and report the cell state to the network device.

Specifically, a reporting manner may be directly reporting, to be specific, reporting information includes the cell state. Alternatively, the reporting manner is indirect reporting, to be specific, the reporting information may include the activation scenario, so that the network device determines the cell state of the to-be-activated cell based on the activation scenario, and further determines the activation delay of the to-be-activated cell, to implement that the manner for determining the activation delay by the network device is consistent with the manner for determining the activation delay by the terminal device.

For example, the reporting information includes at least one bit. A first value (for example, "0") of the at least one bit indicates that the cell state of the to-be-activated cell is that the cell is unknown; a second value (for example, "1") of the at least one bit indicates that the cell state of the to-be-activated cell is that the cell is known and the serving beam is unknown; and a third value (for example, "2") of the at least one bit indicates that the cell state of the to-be-activated cell is that the cell is known and the serving beam is known.

For another example, the reporting information includes an activation scenario, and the activation scenario corresponds to the cell state. The network device may determine the cell state of the to-be-activated cell based on the activation scenario, and further determine the activation delay of the to-be-activated cell. It should be understood that the activation scenario may be determined by using a value of at least one bit.

Optionally, the network device may further determine the cell state of the to-be-activated cell, and send configuration information, to configure the terminal device to determine the cell state of the to-be-activated cell in a same manner.

Specifically, the configuration information may indicate the activation scenario, or may indicate the cell state.

It should be noted that the configuration information may be carried in the activation signaling.

For example, different values of at least one field in the configuration information may indicate different activation scenarios. In this way, the terminal device may learn of a current activation scenario based on the configuration information. For example, a first value (for example, "0") of the at least one field in the configuration information indicates an activation scenario 1, and a second value (for example, "1") of the at least one field in the configuration information indicates an activation scenario 2.

The embodiments described in this specification may be independent solutions, or may be combined based on internal logic. These solutions all fall within the protection scope of this application.

It may be understood that in the foregoing method embodiments, the methods and operations that are implemented by the terminal device may alternatively be implemented by a component (for example, a chip or a circuit) that may be used in the terminal device, and the methods and the operations that are implemented by the access network device may alternatively be implemented by a component (for example, a chip or a circuit) that may be used in the access network device.

The foregoing mainly describes the solutions provided in the embodiments of this application from a perspective of interaction. It may be understood that, to implement the foregoing functions, each network element, such as a transmit-end device or a receive-end device, includes a corresponding hardware structure and/or software module for performing each function. A person skilled in the art should be aware that, with reference to the examples described in the embodiments disclosed in this specification, units and algorithm steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the transmit-end device or the receive-end device may be divided into functional modules based on the foregoing method examples. For example, the transmit-end device or the receive-end device may be divided into functional modules corresponding to functions, or two or more functions may be integrated into one processing module. The integrated module may be implemented in a form of hardware, or may be implemented in a form of a software functional module. It should be noted that, in this embodiment of this application, division into the modules is an example, and is merely a logical function division. During actual implementation, another division manner may be used. An example in which each functional module is obtained through division based on a corresponding function is used below for description.

It should be understood that specific examples in the embodiments of this application are merely intended to help a person skilled in the art better understand the embodiments of this application, rather than limit the scope of the embodiments of this application.

It should be understood that sequence numbers of the foregoing processes do not mean execution sequences in various embodiments of this application. The execution sequences of the processes should be determined based on functions and internal logic of the processes, but should not be construed as any limitation on the implementation processes in the embodiments of this application.

The method provided in the embodiments of this application is described above in detail with reference to FIG. 2 and FIG. 3. An apparatus provided in the embodiments of this application is described below in detail with reference to FIG. 4 to FIG. 11. It should be understood that descriptions of the apparatus embodiments correspond to the descriptions of the method embodiments. Therefore, for content that is not described in detail, refer to the foregoing method embodiments. For brevity, details are not described herein again.

FIG. 4 is a schematic block diagram of an apparatus 400 for determining a cell activation delay according to an embodiment of this application.

It should be understood that the apparatus 400 may correspond to the terminal device or the network device in the embodiment shown in FIG. 2, and may have any function of the terminal device or the network device in the method. The apparatus 400 includes a processing module 410 and a transceiver module 420. The transceiver module may include a sending module and/or a receiving module.

The processing module 410 is configured to determine a spatial filter of a downlink signal of a to-be-activated cell of a terminal device and a spatial filter of a downlink signal of an activated cell of the terminal device.

The processing module 410 is configured to determine an activation delay of the to-be-activated cell depending on whether the downlink spatial filter of the downlink signal of the to-be-activated cell is the same as the downlink spatial filter of the downlink signal of the activated cell, where the activation delay is used to transmit channel state information by using the transceiver module 420.

The spatial filter is a spatial sending filter and/or a spatial receiving filter.

Optionally, when the spatial filter is the spatial sending filter or the spatial receiving filter, the processing module 410 is specifically configured to perform at least one of the following steps: when the spatial filter of the downlink signal of the to-be-activated cell is the same as the spatial filter of the downlink signal of the activated cell, determining that the activation delay of the to-be-activated cell is a first delay; or when the spatial filter of the downlink signal of the to-be-activated cell is different from the spatial filter of the downlink signal of the activated cell, determining that the activation delay of the to-be-activated cell is a second delay.

Optionally, when the spatial filter is the spatial sending filter and the spatial receiving filter, the processing module 410 is specifically configured to perform at least one of the following steps: when a spatial sending filter of the downlink signal of the to-be-activated cell is the same as a spatial sending filter of the downlink signal of the activated cell, and a spatial receiving filter of the downlink signal of the to-be-activated cell is the same as a spatial receiving filter of the downlink signal of the activated cell, determining that the activation delay of the to-be-activated cell is a first delay; when a spatial sending filter of the downlink signal of the to-be-activated cell is the same as a spatial sending filter of the downlink signal of the activated cell, and a spatial receiving filter of the downlink signal of the to-be-activated cell is different from a spatial receiving filter of the downlink signal of the activated cell, determining that the activation delay of the to-be-activated cell is a second delay; when a spatial sending filter of the downlink signal of the to-be-activated cell is different from a spatial sending filter of the downlink signal of the activated cell, and a spatial receiving filter of the downlink signal of the to-be-activated cell is the same as a spatial receiving filter of the downlink signal of the activated cell, determining that the activation delay of the to-be-activated cell is a third delay; or when a spatial sending filter of the downlink signal of the to-be-activated cell is different from a spatial sending filter of the downlink signal of the activated cell, and a spatial receiving filter of the downlink signal of the to-be-activated cell is different from a spatial receiving filter of the downlink signal of the activated cell, determining that the activation delay of the to-be-activated cell is a fourth delay.

Optionally, before determining the activation delay of the to-be-activated cell, the processing module 410 is further configured to determine whether the spatial sending filter of the downlink signal of the to-be-activated cell is the same as the spatial sending filter of the downlink signal of the activated cell, based on at least one of the following information: whether the to-be-activated cell and the activated cell belong to a same frequency range, whether the to-be-activated cell and the activated cell share a radio frequency channel, and whether a frequency spacing between an operating frequency of the to-be-activated cell and an operating frequency of the activated cell is greater than or equal to a preset threshold.

Optionally, an operating frequency of the to-be-activated cell belongs to a frequency range 1 or a frequency range 2.

Optionally, an operating frequency of the activated cell belongs to the frequency range 1 or the frequency range 2.

FIG. 5 is a schematic diagram of a structure of an apparatus 500 for determining a cell activation delay according to an embodiment of this application. The apparatus 500 may be the terminal device or the network device shown in FIG. 2. The apparatus may use a hardware architecture shown in FIG. 5. The apparatus may include a processor 510 and a transceiver 530. The transceiver may include a transmitter and/or a receiver. Optionally, the apparatus may further include a memory 540. The processor 510, the transceiver 530, and the memory 540 communicate with each other through an internal connection path. A related function implemented by the processing module 410 in FIG. 4 may be implemented by the processor 510, and a related function implemented by the transceiver module 420 may be implemented by the processor 510 by controlling the transceiver 530.

Optionally, the processor 510 may be a CPU, a microprocessor, an ASIC, a dedicated processor, or one or more integrated circuits configured to perform the technical solutions in this embodiment of this application. Alternatively, the processor may be one or more devices, circuits, and/or processing cores configured to process data (for example, computer program instructions). For example, the processor may be a baseband processor or a central processing unit. The baseband processor may be configured to process a communication protocol and communication data. The central processing unit may be configured to: control an apparatus (for example, a base station, a terminal device, or a chip) for determining a cell activation delay, execute a software program, and process data of the software program.

Optionally, the processor 510 may include one or more processors, for example, include one or more CPUs. When the processor is one CPU, the CPU may be a single-core CPU, or may be a multi-core CPU.

The transceiver 530 is configured to send and receive data and/or a signal. The transceiver may include a transmitter and a receiver. The transmitter is configured to send data and/or a signal, and the receiver is configured to receive data and/or a signal.

The memory 540 includes but is not limited to a RAM, a ROM, an EPROM, and a compact disc read-only memory (compact disc read-only memory, CD-ROM). The memory 540 is configured to store related instructions and data.

The memory 540 is configured to store program code and data of the terminal device, and may be a separate component or integrated into the processor 510.

Specifically, the processor 510 is configured to control information transmission between the transceiver and the terminal device. For details, refer to the descriptions in the foregoing method embodiments. Details are not described herein again.

During specific implementation, in an embodiment, the apparatus 500 may further include an output device and an input device. The output device communicates with the processor 510, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 510, and may receive an input from a user in a plurality of manners. For example, the input device may be a mouse, a keyboard, a touchscreen device, a sensing device, or the like.

It may be understood that FIG. 5 shows only a simplified design of the apparatus for determining a cell activation delay. During actual application, the apparatus may further include other necessary components, including but not limited to any quantity of transceivers, processors, controllers, memories, and the like, and all terminal devices that can implement this application shall fall within the protection scope of this application.

In a possible design, the apparatus 500 may be a chip, for example, may be a communication chip that can be used in a terminal device or a network device, and is configured to implement a related function of the processor 510 in the terminal device or the network device. The chip may be a field programmable gate array, a dedicated integrated chip, a system chip, a central processing unit, a network processor, a digital signal processing circuit, or a microcontroller for implementing a related function, or may be a programmable controller or another integrated chip. Optionally, the chip may include one or more memories, configured to store program code. When the code is executed, the processor is enabled to implement a corresponding function.

An embodiment of this application further provides an apparatus. The apparatus may be a terminal device or a network device, or may be a circuit. The apparatus may be configured to perform an action performed by the terminal device in the foregoing method embodiments.

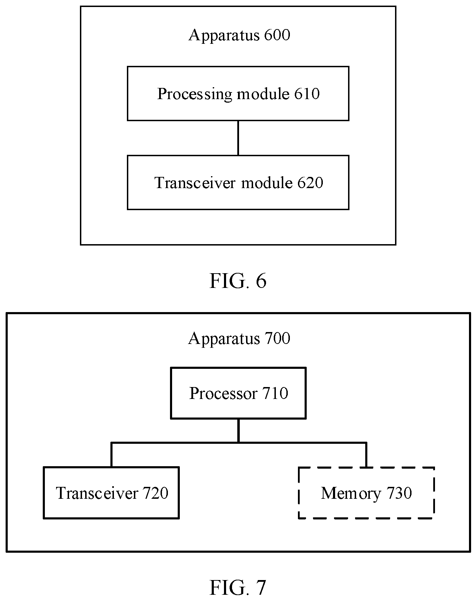

FIG. 6 is a schematic block diagram of an apparatus 600 for determining a cell activation delay according to another embodiment of this application.

It should be understood that the apparatus 600 may correspond to the network device or the terminal device in the embodiment shown in FIG. 3, and may have any function of the network device or the terminal device in the method. The apparatus 600 includes a processing module 610 and a transceiver module 620.

The processing module 610 is configured to determine a cell state of a to-be-activated cell of a terminal device.

The processing module 610 is further configured to determine an activation delay of the to-be-activated cell based on the cell state of the to-be-activated cell, and the activation delay is used to transmit channel state information by using the transceiver module 620.

Optionally, the cell state includes at least one of whether the cell is known, synchronization information, whether a serving beam is known, a beam reception capability of the terminal device, and whether the channel state information is known.

Optionally, the synchronization information includes at least one of whether an operating frequency is known, whether a downlink timing is known, and whether an uplink timing is known.

Optionally, the beam reception capability of the terminal device includes at least one of whether multi-beam sweeping reception is supported, whether wide beam reception is supported, and whether synchronization signal block SSB symbol-level beam reception is supported.

Optionally, the processing module 610 is specifically configured to perform at least one of the following steps: when the to-be-activated cell is in a state in which the cell is unknown, and the serving beam is unknown, determining that the activation delay of the to-be-activated cell is a first delay; when the to-be-activated cell is in a state in which the cell is unknown, the serving beam is unknown, and the terminal device supports multi-beam sweeping reception, determining that the activation delay of the to-be-activated cell is a second delay; when the to-be-activated cell is in a state in which the cell is unknown, the serving beam is unknown, and the terminal device supports wide beam reception, determining that the activation delay of the to-be-activated cell is a third delay; when the to-be-activated cell is in a state in which the cell is known, and the serving beam is unknown, determining that the activation delay of the to-be-activated cell is a fourth delay; when the to-be-activated cell is in a state in which the cell is known, and the serving beam is known, determining that the activation delay of the to-be-activated cell is a fifth delay; or when the to-be-activated cell is in a state in which the cell is known, the serving beam is known, and the channel state information is unknown, determining that the activation delay of the to-be-activated cell is a sixth delay.

Optionally, before determining an activation delay of the to-be-activated cell, the processing module 610 is further configured to: when the to-be-activated cell and at least one activated cell belong to a same frequency range, determine that the to-be-activated cell is in a state in which the cell is known and/or the serving beam is known; when a spatial filter of a downlink signal of the to-be-activated cell is the same as a spatial filter of a downlink signal of at least one activated cell, determine that the to-be-activated cell is in a state in which the cell is known and/or the serving beam is known; when a valid measurement result of the to-be-activated cell is received within a preset time period that is before activation signaling is transmitted, determine that the to-be-activated cell is in a state in which the cell is known and/or the serving beam is known; or when the to-be-activated cell and all activated cells belong to different frequency ranges, determine that the to-be-activated cell is in a state in which the cell is unknown and/or the serving beam is unknown.

FIG. 7 shows an apparatus 700 for determining a cell activation delay according to another embodiment of this application. The apparatus 700 may be the terminal device or the network device shown in FIG. 3. The apparatus may use a hardware architecture shown in FIG. 7. The apparatus may include a processor 710 and a transceiver 730. The transceiver may include a transmitter and/or a receiver. Optionally, the apparatus may further include a memory 740. The processor 710, the transceiver 730, and the memory 740 communicate with each other through an internal connection path. A related function implemented by the processing module 610 in FIG. 6 may be implemented by the processor 710, and a related function implemented by the transceiver module 620 may be implemented by the processor 710 by controlling the transceiver 730.

Optionally, the processor 710 may be a CPU, a microprocessor, an ASIC, a dedicated processor, or one or more integrated circuits configured to perform the technical solutions in this embodiment of this application. Alternatively, the processor may be one or more devices, circuits, and/or processing cores configured to process data (for example, computer program instructions). For example, the processor may be a baseband processor or a central processing unit. The baseband processor may be configured to process a communication protocol and communication data. The central processing unit may be configured to: control an apparatus (for example, a base station, a terminal device, or a chip) for determining a cell activation delay, execute a software program, and process data of the software program.

Optionally, the processor 710 may include one or more processors, for example, include one or more CPUs. When the processor is one CPU, the CPU may be a single-core CPU, or may be a multi-core CPU.

The transceiver 730 is configured to send and receive data and/or a signal, and receive data and/or a signal. The transceiver may include a transmitter and a receiver. The transmitter is configured to send data and/or a signal, and the receiver is configured to receive data and/or a signal.

The memory 740 includes but is not limited to a RAM, a ROM, an EPROM, and a compact disc read-only memory (compact disc read-only memory, CD-ROM). The memory 740 is configured to store related instructions and data.

The memory 740 is configured to store program code and data of the terminal device, and may be a separate component or integrated into the processor 710.

Specifically, the processor 710 is configured to control information transmission between the transceiver and the terminal device. For details, refer to the descriptions in the foregoing method embodiments. Details are not described herein again.

During specific implementation, in an embodiment, the apparatus 700 may further include an output device and an input device. The output device communicates with the processor 710, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 710, and may receive an input from a user in a plurality of manners. For example, the input device may be a mouse, a keyboard, a touchscreen device, a sensing device, or the like.

It may be understood that FIG. 7 shows only a simplified design of the apparatus for determining a cell activation delay. During actual application, the apparatus may further include other necessary components, including but not limited to any quantity of transceivers, processors, controllers, memories, and the like, and all terminal devices that can implement this application shall fall within the protection scope of this application.

In a possible design, the apparatus 700 may be a chip, for example, may be a communication chip that can be used in a terminal device or a network device, and is configured to implement a related function of the processor 710 in the terminal device or the network device. The chip may be a field programmable gate array, a dedicated integrated chip, a system chip, a central processing unit, a network processor, a digital signal processing circuit, or a microcontroller for implementing a related function, or may be a programmable controller or another integrated chip. Optionally, the chip may include one or more memories, configured to store program code. When the code is executed, the processor is enabled to implement a corresponding function.

An embodiment of this application further provides an apparatus. The apparatus may be a terminal device or a network device, or may be a circuit. The apparatus may be configured to perform an action performed by the terminal device in the foregoing method embodiments.

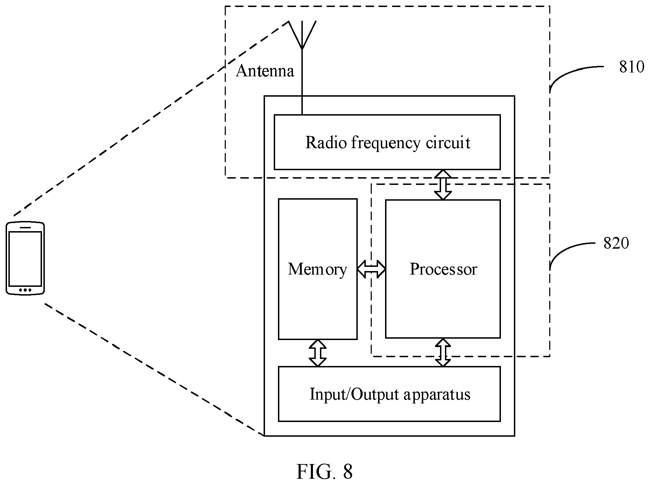

Optionally, when the apparatus in this embodiment is a terminal device, FIG. 8 is a schematic diagram of a structure of a simplified terminal device. For ease of understanding and convenience of figure illustration, an example in which the terminal device is a mobile phone is used in FIG. 8. As shown in FIG. 8, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to send and receive the radio frequency signal in a form of an electromagnetic wave. The input/output apparatus such as a touchscreen, a display, or a keyboard is mainly configured to receive data input by a user and output data to the user. It should be noted that some types of terminal devices may have no input/output apparatus.

When data needs to be sent, the processor performs baseband processing on the to-be-sent data, and outputs a baseband signal to the radio frequency circuit. After performing radio frequency processing on the baseband signal, the radio frequency circuit sends the radio frequency signal in the form of the electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 8 shows only one memory and one processor. An actual terminal device product may include one or more processors and one or more memories. The memory may also be referred to as a storage medium, a storage device, or the like. The memory may be disposed independent of the processor, or may be integrated into the processor. This is not limited in this embodiment of this application.

In this embodiment of this application, the antenna and the radio frequency circuit that have receiving and sending functions may be considered as a transceiver unit of the terminal device, and the processor that has a processing function may be considered as a processing unit of the terminal device. As shown in FIG. 8, the terminal device includes a transceiver unit 810 and a processing unit 820. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 810 and that is configured to implement a receiving function may be considered as a receiving unit, and a component that is in the transceiver unit 810 and that is configured to implement a sending function may be considered as a sending unit. In other words, the transceiver unit 810 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiving circuit, or the like. The sending unit sometimes may also be referred to as a transmitter machine, a transmitter, a transmitter circuit, or the like.

It should be understood that the transceiver unit 810 is configured to perform a sending operation and a receiving operation on a terminal device in the foregoing method embodiments, and the processing unit 820 is configured to perform another operation excluding the receiving operation and the sending operation of the terminal device in the foregoing method embodiments.

For example, in an implementation, the processing unit 820 is configured to: perform the processing steps 201 and/or 202 of the terminal device in FIG. 2, or perform the processing steps 301 and/or 302 of the terminal device in FIG. 3. The transceiver unit 810 is configured to perform the sending and receiving operations in FIG. 2 or FIG. 3.

When the communication apparatus is a chip, the chip includes a transceiver unit and a processing unit. The transceiver unit may be an input/output circuit or a communication interface. The processing unit is a processor, a microprocessor, or an integrated circuit integrated on the chip.

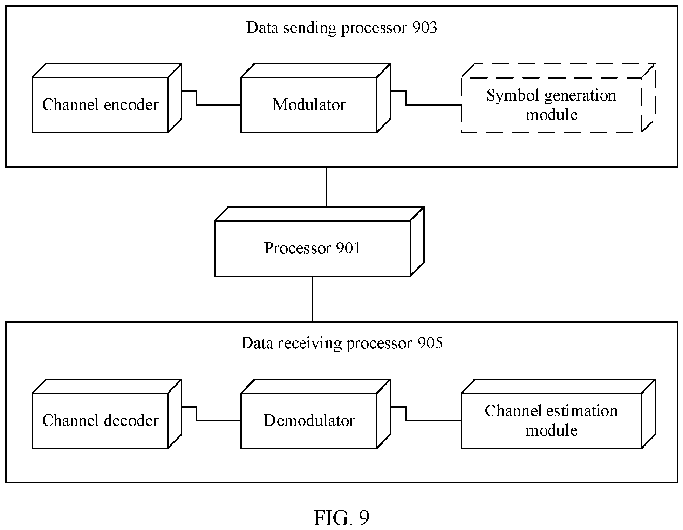

Optionally, when the apparatus is a terminal device, further refer to a device shown in FIG. 9. In an example, the device may implement a function similar to that of the processor 810 in FIG. 8. In FIG. 9, the device includes a processor 901, a data sending processor 903, and a data receiving processor 905. The processing module in the foregoing embodiment may be the processor 901 in FIG. 9, and completes a corresponding function. The transceiver module 420 or the transceiver module 620 in the foregoing embodiments may be the data receiving processor 905 or the data sending processor 903 in FIG. 9. Although FIG. 9 shows a channel encoder and a channel decoder, it may be understood that these modules are merely examples, and do not constitute limitative descriptions of this embodiment.

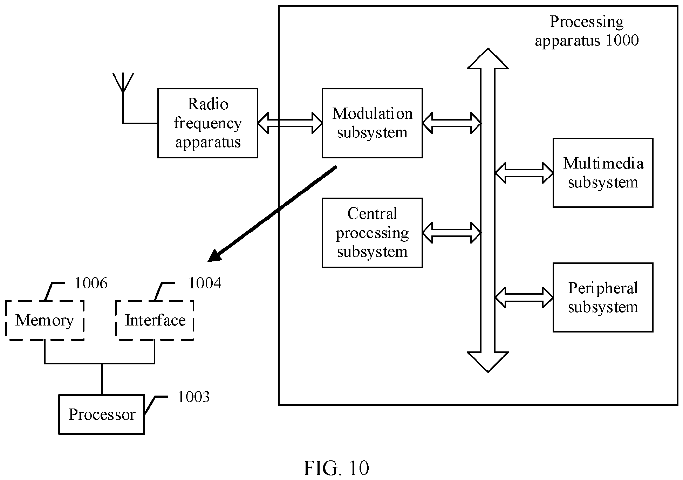

FIG. 10 shows another form of a terminal device according to this embodiment. A processing apparatus 1000 includes modules such as a modulation subsystem, a central processing subsystem, and a peripheral subsystem. The communication device in this embodiment may be used as the modulation subsystem in the processing apparatus 1100. Specifically, the modulation subsystem may include a processor 1003 and an interface 1004. The processor 1003 completes a function of the processing module 410 or the processing module 610, and the interface 1004 completes a function of the transceiver module 420 or the transceiver module 620. In another variant, the modulation subsystem includes a memory 1006, a processor 1003, and a program that is stored in the memory and that can be run on the processor. When executing the program, the processor implements the method according to one of the first to the fifth embodiments. It should be noted that the memory 1006 may be non-volatile or volatile. The memory 1006 may be located in the modulation subsystem, or may be located in the processing apparatus 1000, provided that the memory 1006 can be connected to the processor 1003.

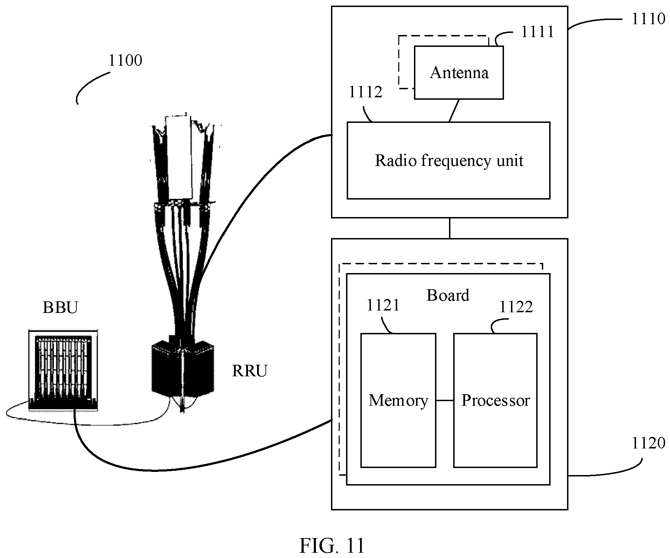

When the apparatus in this embodiment is an access network device, the access network device may be shown in FIG. 11. An apparatus 1100 includes one or more radio frequency units, such as a remote radio unit (remote radio unit, RRU) 1110 and one or more baseband units (baseband units, BBUs) (which may also be referred to as digital units, digital units, DUs) 1120. The RRU 1110 may be referred to as a transceiver module, and corresponds to the receiving module and the sending module. Optionally, the transceiver module may also be referred to as a transceiver machine, a transceiver circuit, a transceiver, or the like, and may include at least one antenna 1111 and a radio frequency unit 1112. The RRU 1110 is mainly configured to: send and receive a radio frequency signal, and perform conversion between the radio frequency signal and a baseband signal. For example, the RRU 1110 is configured to send indication information to a terminal device. The BBU 1110 is mainly configured to: perform baseband processing, control a base station, and the like. The RRU 1110 and the BBU 1120 may be physically disposed together, or may be physically separated, to be specific, in a distributed base station.

The BBU 1120 is a control center of the base station, and may also be referred to as a processing module. The BBU 1120 may correspond to the processing module 410 in FIG. 4 or the processing module 610 in FIG. 6, and is mainly configured to implement a baseband processing function such as channel encoding, multiplexing, modulation, or spreading. For example, the BBU (the processing module) may be configured to control the base station to perform an operation procedure related to the access network device in the foregoing method embodiments, for example, generate the foregoing indication information.

In an example, the BBU 1120 may include one or more boards, and a plurality of boards may jointly support a radio access network (for example, an LTE network) of a single access standard, or may separately support radio access networks (for example, an LTE network, a 5G network, or another network) of different access standards. The BBU 1120 further includes a memory 1121 and a processor 1122. The memory 1121 is configured to store necessary instructions and necessary data. The processor 1122 is configured to control the base station to perform a necessary action, for example, configured to control the base station to perform an operation procedure related to the access network device in the foregoing method embodiments. The memory 1121 and the processor 1122 may serve the one or more boards. In other words, the memory and the processor may be independently disposed on each board. Alternatively, a plurality of boards may share the same memory and the same processor. In addition, a necessary circuit may be further disposed on each board.

In addition, the access network device is not limited to the foregoing forms, and may also be in another form. For example, the access network device includes a BBU and an adaptive radio unit (adaptive radio unit, ARU), or includes a BBU and an active antenna unit (active antenna unit, AAU), or may be customer premises equipment (customer premises equipment, CPE), or may be in another form. This is not limited in this application.

In another form of this embodiment, a computer-readable storage medium is provided. The computer-readable storage medium stores instructions. When the instructions are executed, the methods in the foregoing method embodiments are performed.

In another form of this embodiment, a computer program product including instructions is provided. When the instructions are executed, the methods in the foregoing method embodiments are performed.

All or some of the foregoing embodiments may be implemented by using software, hardware, firmware, or any combination thereof. When the software is used for implementation, all or some of the embodiments may be implemented in a form of a computer program product. The computer program product includes one or more computer instructions. When the computer instructions are loaded and executed on the computer, all or some of the procedures or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It should be understood that, the processor may be an integrated circuit chip, and has a signal processing capability. In an implementation process, the steps in the foregoing method embodiments may be completed by using a hardware integrated logic circuit in the processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in the embodiments of this application. The general-purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in the embodiments of this application may be a volatile memory or a non-volatile memory, or may include both a volatile memory and a non-volatile memory. The non-volatile memory may be a ROM, a PROM, an EPROM, an EEPROM, or a flash memory. The volatile memory may be a RAM and is used as an external cache. According to a description that is used as an example instead of a limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchronous link DRAM, SLDRAM), and a direct rambus random access memory (direct rambus RAM, DR RAM).

In this application, "at least one" means one or more, and "a plurality of' means two or more. The term "and/or" describes an association relationship between associated objects and may indicate three relationships. For example, A and/or B may indicate the following cases: Only A exists, both A and B exist, and only B exists, where A and B may be singular or plural. The character "/" usually indicates an "or" relationship between the associated objects. "At least one item (piece) of the following" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the entire specification does not necessarily refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined based on functions and internal logic of the processes, but should not be construed as any limitation on the implementation processes in the embodiments of this application.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in figures, both a computing device and an application that runs on a computing device may be components. One or more components may reside within a process and/or an execution thread, and a component may be located on one computer and/or distributed between two or more computers. In addition, these components may be executed from various computer-readable media that store various data structures. The components may communicate by using a local and/or remote process and based on, for example, a signal having one or more data packets (for example, data from two components interacting with another component in a local system and/or a distributed system, and/or across a network such as the internet interacting with other systems by using the signal).

It should be further understood that "first", "second", and various numerical symbols in this specification are merely used for distinguishing for ease of description, and are not used to limit a scope of the embodiments of this application.

It should be understood that the term "and/or" in this specification describes only an association relationship between associated objects and represents that three relationships may exist. For example, A and/or B may represent the following three cases: Only A exists, both A and B exist, and only B exists. When only A or only B exists, a quantity of A or B is not limited. In an example in which only A exists, it may be understood as that there is one or more A.

A person of ordinary skill in the art may be aware that, with reference to the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiments. Details are not described herein again.

In the several embodiments provided in this application, it should be understood that the disclosed system, apparatus, and method may be implemented in another manner. For example, the apparatus embodiments described above are merely examples. For example, division into the units is merely logical function division, and may be other division during actual implementation. For example, a plurality of units or components may be combined or integrated into another system, or some features may be ignored or not performed. In addition, the displayed or discussed mutual couplings, direct couplings, or communication connections may be implemented by using some interfaces. The indirect couplings or communication connections between the apparatuses or units may be implemented in electrical, mechanical, or other forms.

The units described as separate parts may or may not be physically separated, and parts displayed as units may or may not be physical units, that is, may be located in one position, or may be distributed on a plurality of network units. Some or all of the units may be selected based on actual requirements to achieve the objectives of the solutions in the embodiments.

In addition, functional units in the embodiments of this application may be integrated into one processing unit, or each of the units may exist alone physically, or two or more units are integrated into one unit.

When the functions are implemented in the form of a software function unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining a cell activation delay, comprising:
determining a spatial filter of a downlink signal of a to-be-activated cell of a terminal device and a spatial filter of a downlink signal of an activated cell of the terminal device; and
determining an activation delay of the to-be-activated cell depending on whether the downlink spatial filter of the downlink signal of the to-be-activated cell is the same as the downlink spatial filter of the downlink signal of the activated cell, wherein the activation delay is used to transmit channel state information.

2. The method according to claim 1, wherein the spatial filter is a spatial sending filter and/or a spatial receiving filter.

3. The method according to claim 2, wherein when the spatial filter is the spatial sending filter or the spatial receiving filter, the determining an activation delay of the to-be-activated cell depending on whether the downlink spatial filter of the downlink signal of the to-be-activated cell is the same as the downlink spatial filter of the downlink signal of the activated cell comprises at least one of the following:
when the spatial filter of the downlink signal of the to-be-activated cell is the same as the spatial filter of the downlink signal of the activated cell, determining that the activation delay of the to-be-activated cell is a first delay; or
when the spatial filter of the downlink signal of the to-be-activated cell is different from the spatial filter of the downlink signal of the activated cell, determining that the activation delay of the to-be-activated cell is a second delay.

4. The method according to claim 2, wherein when the spatial filter is the spatial sending filter and the spatial receiving filter, the determining an activation delay of the to-be-activated cell depending on whether the spatial filter of the downlink signal of the to-be-activated cell is the same as the spatial filter of the downlink signal of the activated cell comprises at least one of the following:
when a spatial sending filter of the downlink signal of the to-be-activated cell is the same as a spatial sending filter of the downlink signal of the activated cell, and a spatial receiving filter of the downlink signal of the to-be-activated cell is the same as a spatial receiving filter of the downlink signal of the activated cell, determining that the activation delay of the to-be-activated cell is a first delay;
when a spatial sending filter of the downlink signal of the to-be-activated cell is the same as a spatial sending filter of the downlink signal of the activated cell, and a spatial receiving filter of the downlink signal of the to-be-activated cell is different from a spatial receiving filter of the downlink signal of the activated cell, determining that the activation delay of the to-be-activated cell is a second delay;
when a spatial sending filter of the downlink signal of the to-be-activated cell is different from a spatial sending filter of the downlink signal of the activated cell, and a spatial receiving filter of the downlink signal of the to-be-activated cell is the same as a spatial receiving filter of the downlink signal of the activated cell, determining that the activation delay of the to-be-activated cell is a third delay; or
when a spatial sending filter of the downlink signal of the to-be-activated cell is different from a spatial sending filter of the downlink signal of the activated cell, and a spatial receiving filter of the downlink signal of the to-be-activated cell is different from a spatial receiving filter of the downlink signal of the activated cell, determining that the activation delay of the to-be-activated cell is a fourth delay.

5. The method according to any one of claims 2 to 4, wherein before the determining an activation delay of the to-be-activated cell, the method further comprises:
determining whether the spatial sending filter of the downlink signal of the to-be-activated cell is the same as the spatial sending filter of the downlink signal of the activated cell, based on at least one of the following information:
whether the to-be-activated cell and the activated cell belong to a same frequency range, whether the to-be-activated cell and the activated cell share a radio frequency channel, and whether a frequency spacing between an operating frequency of the to-be-activated cell and an operating frequency of the activated cell is greater than or equal to a preset threshold.

6. The method according to any one of claims 1 to 5, wherein the operating frequency of the to-be-activated cell belongs to a frequency range 1 or a frequency range 2.

7. The method according to any one of claims 1 to 6, wherein the operating frequency of the activated cell belongs to the frequency range 1 or the frequency range 2.

8. A method for determining a cell activation delay, comprising:
determining a cell state of a to-be-activated cell of a terminal device; and
determining an activation delay of the to-be-activated cell based on the cell state of the to-be-activated cell, wherein the activation delay is used to transmit channel state information.

9. The method according to claim 8, wherein the cell state comprises at least one of whether the cell is known, synchronization information, whether a serving beam is known, a beam reception capability of the terminal device, and whether the channel state information is known.

10. The method according to claim 9, wherein the synchronization information comprises at least one of whether an operating frequency is known, whether a downlink timing is known, and whether an uplink timing is known.

11. The method according to claim 9, wherein the beam reception capability of the terminal device comprises at least one of whether multi-beam sweeping reception is supported, whether wide beam reception is supported, and whether synchronization signal block SSB symbol-level beam reception is supported.

12. The method according to least one of claims 9 to 11, wherein the determining an activation delay of the to-be-activated cell based on the cell state of the to-be-activated cell comprises at least one of the following:
when the to-be-activated cell is in a state in which the cell is unknown, and the serving beam is unknown, determining that the activation delay of the to-be-activated cell is a first delay;
when the to-be-activated cell is in a state in which the cell is unknown, the serving beam is unknown, and the terminal device supports multi-beam sweeping reception, determining that the activation delay of the to-be-activated cell is a second delay;
when the to-be-activated cell is in a state in which the cell is unknown, the serving beam is unknown, and the terminal device supports wide beam reception, determining that the activation delay of the to-be-activated cell is a third delay;
when the to-be-activated cell is in a state in which the cell is known, and the serving beam is unknown, determining that the activation delay of the to-be-activated cell is a fourth delay;
when the to-be-activated cell is in a state in which the cell is known, and the serving beam is known, determining that the activation delay of the to-be-activated cell is a fifth delay; or
when the to-be-activated cell is in a state in which the cell is known, the serving beam is known, and the channel state information is unknown, determining that the activation delay of the to-be-activated cell is a sixth delay.

13. The method according to any one of claims 9 to 12, wherein before the determining an activation delay of the to-be-activated cell, the method further comprises:
when the to-be-activated cell and at least one activated cell belong to a same frequency range, determining that the to-be-activated cell is in a state in which the cell is known and/or the serving beam is known;
when a spatial filter of a downlink signal of the to-be-activated cell is the same as a spatial filter of a downlink signal of at least one activated cell, determining that the to-be-activated cell is in a state in which the cell is known and/or the serving beam is known;
when a valid measurement result of the to-be-activated cell is received within a preset time period that is before activation signaling is transmitted, determining that the to-be-activated cell is in a state in which the cell is known and/or the serving beam is known; or
when the to-be-activated cell and all activated cells belong to different frequency ranges, determining that the to-be-activated cell is in a state in which the cell is unknown and/or the serving beam is unknown.

14. An apparatus for determining a cell activation delay, comprising:
a processing module, configured to determine a spatial filter of a downlink signal of a to-be-activated cell of a terminal device and a spatial filter of a downlink signal of an activated cell of the terminal device, wherein
the processing module is configured to determine an activation delay of the to-be-activated cell depending on whether the downlink spatial filter of the downlink signal of the to-be-activated cell is the same as the downlink spatial filter of the downlink signal of the activated cell, and the activation delay is used to transmit channel state information by using a transceiver module.

15. The apparatus according to claim 14, wherein the spatial filter is a spatial sending filter and/or a spatial receiving filter.

16. The apparatus according to claim 15, wherein when the spatial filter is a spatial sending filter or a spatial receiving filter, the processing module is specifically configured to perform at least one of the following steps:
when the spatial filter of the downlink signal of the to-be-activated cell is the same as the spatial filter of the downlink signal of the activated cell, determining that the activation delay of the to-be-activated cell is a first delay; or
when the spatial filter of the downlink signal of the to-be-activated cell is different from the spatial filter of the downlink signal of the activated cell, determining that the activation delay of the to-be-activated cell is a second delay.

17. The apparatus according to claim 15, wherein when the spatial filter is the spatial sending filter and the spatial receiving filter, the processing module is specifically configured to perform at least one of the following steps:
when a spatial sending filter of the downlink signal of the to-be-activated cell is the same as a spatial sending filter of the downlink signal of the activated cell, and a spatial receiving filter of the downlink signal of the to-be-activated cell is the same as a spatial receiving filter of the downlink signal of the activated cell, determining that the activation delay of the to-be-activated cell is a first delay;
when a spatial sending filter of the downlink signal of the to-be-activated cell is the same as a spatial sending filter of the downlink signal of the activated cell, and a spatial receiving filter of the downlink signal of the to-be-activated cell is different from a spatial receiving filter of the downlink signal of the activated cell, determining that the activation delay of the to-be-activated cell is a second delay;
when a spatial sending filter of the downlink signal of the to-be-activated cell is different from a spatial sending filter of the downlink signal of the activated cell, and a spatial receiving filter of the downlink signal of the to-be-activated cell is the same as a spatial receiving filter of the downlink signal of the activated cell, determining that the activation delay of the to-be-activated cell is a third delay; or
when a spatial sending filter of the downlink signal of the to-be-activated cell is different from a spatial sending filter of the downlink signal of the activated cell, and a spatial receiving filter of the downlink signal of the to-be-activated cell is different from a spatial receiving filter of the downlink signal of the activated cell, determining that the activation delay of the to-be-activated cell is a fourth delay.

18. The apparatus according to any one of claims 15 to 17, wherein before determining the activation delay of the to-be-activated cell, the processing module is further configured to determine whether the spatial sending filter of the downlink signal of the to-be-activated cell is the same as the spatial sending filter of the downlink signal of the activated cell, based on at least one of the following information:
whether the to-be-activated cell and the activated cell belong to a same frequency range, whether the to-be-activated cell and the activated cell share a radio frequency channel, and whether a frequency spacing between an operating frequency of the to-be-activated cell and an operating frequency of the activated cell is greater than or equal to a preset threshold.

19. An apparatus for determining a cell activation delay, comprising:
a processing module, configured to determine a cell state of a to-be-activated cell of a terminal device, wherein
the processing module is further configured to determine an activation delay of the to-be-activated cell based on the cell state of the to-be-activated cell, and the activation delay is used to transmit channel state information by using a transceiver module.

20. The apparatus according to claim 19, wherein the cell state comprises at least one of whether the cell is known, synchronization information, whether a serving beam is known, a beam reception capability of the terminal device, and whether the channel state information is known.

21. The apparatus according to claim 20, wherein the processing module is specifically configured to perform at least one of the following steps:
when the to-be-activated cell is in a state in which the cell is unknown, and the serving beam is unknown, determining that the activation delay of the to-be-activated cell is a first delay;
when the to-be-activated cell is in a state in which the cell is unknown, the serving beam is unknown, and the terminal device supports multi-beam sweeping reception, determining that the activation delay of the to-be-activated cell is a second delay;
when the to-be-activated cell is in a state in which the cell is unknown, the serving beam is unknown, and the terminal device supports wide beam reception, determining that the activation delay of the to-be-activated cell is a third delay;
when the to-be-activated cell is in a state in which the cell is known, and the serving beam is unknown, determining that the activation delay of the to-be-activated cell is a fourth delay;
when the to-be-activated cell is in a state in which the cell is known, and the serving beam is known, determining that the activation delay of the to-be-activated cell is a fifth delay; or
when the to-be-activated cell is in a state in which the cell is known, the serving beam is known, and the channel state information is unknown, determining that the activation delay of the to-be-activated cell is a sixth delay.

22. The apparatus according to claim 20 or 21, wherein before determining the activation delay of the to-be-activated cell, the processing module is further configured to:
when the to-be-activated cell and at least one activated cell belong to a same frequency range, determine that the to-be-activated cell is in a state in which the cell is known and/or the serving beam is known;
when a spatial filter of a downlink signal of the to-be-activated cell is the same as a spatial filter of a downlink signal of at least one activated cell, determine that the to-be-activated cell is in a state in which the cell is known and/or the serving beam is known;
when a valid measurement result of the to-be-activated cell is received within a preset time period that is before activation signaling is transmitted, determine that the to-be-activated cell is in a state in which the cell is known and/or the serving beam is known; or
when the to-be-activated cell and all activated cells belong to different frequency ranges, determine that the to-be-activated cell is in a state in which the cell is unknown and/or the serving beam is unknown.

23. A computer-readable storage medium, comprising instructions, wherein when the instructions are run on a computer, the computer is enabled to perform the method according to any one of claims 1 to 13.

24. A computer program product, wherein when the computer program product runs on a processor, the processor is enabled to perform the method according to any one of claims 1 to 13.

25. An apparatus, comprising a processor, wherein the processor is configured to invoke a program stored in a memory, to perform the method according to any one of claims 1 to 13.

26. An apparatus, comprising a processor and an interface circuit, wherein the processor is configured to:
communicate with another apparatus through the interface circuit, and perform the method according to any one of claims 1 to 13.

27. A terminal device, comprising the apparatus according to claim 25 or 26.

28. A network device, comprising the apparatus according to claim 25 or 26.
